# EUROPEAN PATENT APPLICATION

(11) **EP 4 694 446 A1**
(43) Date of publication of application: **11.02.2026**
(21) Application number: 23931239.0
(22) Date of filing: 03.04.2023
(51) Int. Cl.: H04W 72/044

(54) **COMMUNICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Hersina, Günter
(86) International application number: PCT/CN2023/086046
(87) International publication number: WO 2024/207163

(57) **Abstract**

The present disclosure relates to a communication method and apparatus, and a device and a storage medium. The method comprises: determining at least one new reference signal qnew from a first candidate beam reference signal set and a second candidate beam reference signal set; and according to a signaling indication or a preset rule, determining that a target channel and/or a target reference signal uses a beam corresponding to the qnew to perform communication. In the present disclosure, a qnew is determined from candidate beam reference signal sets, and it is determined that a target channel and/or a target reference signal uses a beam corresponding to the qnew to perform communication, such that a success rate of beam failure recovery based on a TRP is improved.

## Description

### TECHNICAL FIELD

The present disclosure relates to the field of communication technology, and specifically to a communication method and apparatus, a communication device and a storage medium.

### BACKGROUND

In a new radio (NR) network, especially when a communication frequency band is in frequency range 2, since high-frequency channels attenuate quickly, beam-based transmission and reception are required to ensure coverage.

In the traditional method, for reception of a physical downlink control channel (PDCCH), a network device can configure a transmission configuration indication (TCI) state for a control resource set (CORESET) to indicate quasi co-location (QCL) information of the PDCCH. For example, the information may include QCL type D, that is, spatial parameters, also known as beams. After a terminal obtains the TCI state of the CORESET, the terminal may move, which may cause the TCI state obtained by the terminal to be inapplicable. Therefore, the terminal needs to configure resources for failure detection.

### SUMMARY

In order to overcome the problems existing in the related art, the present disclosure provides a communication method and apparatus, a communication device and a storage medium.

According to a first aspect of the embodiments of the present disclosure, a communication method is provided and performed by a terminal, including: determining at least one new reference signal qnew from a first candidate beam reference signal set and/or a second candidate beam reference signal set; and determining, according to a signaling indication or a preset rule, that a target channel and/or a target reference signal uses a beam corresponding to the at least one new reference signal qnew for communication.

According to a second aspect of the embodiments of the present disclosure, a communication method is provided and performed by a network device, including: sending first configuration information, in which the first configuration information is used to instruct a terminal to configure a first candidate beam reference signal set and/or a second candidate beam reference signal set; receiving information indicating a new reference signal qnew, in which the new reference signal qnew is determined by the terminal from the first candidate beam reference signal set and/or the second candidate beam reference signal set; and determining that a target channel and/or a target reference signal uses a beam corresponding to the at least one new reference signal qnew for communication.

According to a third aspect of the embodiments of the present disclosure, a communication apparatus is provided, including: a processing module, configured to determine at least one new reference signal qnew from a first candidate beam reference signal set and/or a second candidate beam reference signal set; and a communication module, configured to determine, according to a signaling indication or a preset rule, that a target channel and/or a target reference signal uses a beam corresponding to the at least one new reference signal qnew for communication.

According to a fourth aspect of the embodiments of the present disclosure, a communication apparatus is provided, including: a communication module, configured to: send first configuration information, in which the first configuration information is used to instruct a terminal to configure a first candidate beam reference signal set and/or a second candidate beam reference signal set; receive information indicating a new reference signal qnew, in which the new reference signal qnew is determined by the terminal from the first candidate beam reference signal set and/or the second candidate beam reference signal set; and determine that a target channel and/or a target reference signal uses a beam corresponding to the at least one new reference signal qnew for communication.

According to a fifth aspect of the embodiments of the present disclosure, a communication device is provided, including: a processor, a transceiver, and a memory for storing instructions executable by the processor. The processor is configured to perform the method of the first aspect or any one of the first aspect.

According to a sixth aspect of the embodiments of the present disclosure, a communication device is provided, including: a processor, a transceiver, and a memory for storing instructions executable by the processor. The processor is configured to perform the method of the second aspect or any one of the second aspect.

According to a seventh aspect of the embodiments of the present disclosure, a non-transitory computer-readable storage medium. When instructions in the storage medium are executed by a processor of a terminal, the terminal is caused to perform the method of the first aspect or any one of the first aspect.

According to an eighth aspect of the embodiments of the present disclosure, a non-transitory computer-readable storage medium. When instructions in the storage medium are executed by a processor of a terminal, the terminal is caused to perform the method of the second aspect or any one of the second aspect.

The technical solution provided by the embodiments of the present disclosure may have the following beneficial effects. By determining the at least one new refence signal qnew from a candidate beam reference signal set, and determining that the target channel and/or the target reference signal uses the beam corresponding to qnew for communication, a success rate of TRP-based beam failure recovery is improved.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of the specification, illustrate embodiments consistent with the present disclosure, and serve to explain the principle of the embodiments of the present disclosure together with the specification.
FIG. 1 is a schematic diagram of a wireless communication system according to an embodiment of the present disclosure;
FIG. 2 is a flowchart of a communication method according to an embodiment of the present disclosure;
FIG. 3 is a flowchart of a communication method according to an embodiment of the present disclosure;
FIG. 4 is a flowchart of a communication method according to an embodiment of the present disclosure;
FIG. 5 is a flowchart of a communication method according to an embodiment of the present disclosure;
FIG. 6 is a flowchart of a communication method according to an embodiment of the present disclosure;
FIG. 7 is a block diagram of a communication apparatus according to an embodiment of the present disclosure;
FIG. 8 is a block diagram of a communication apparatus according to an embodiment of the present disclosure;
FIG. 9 is a block diagram of a communication apparatus according to an embodiment of the present disclosure; and
FIG. 10 is a block diagram of a communication apparatus according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure.

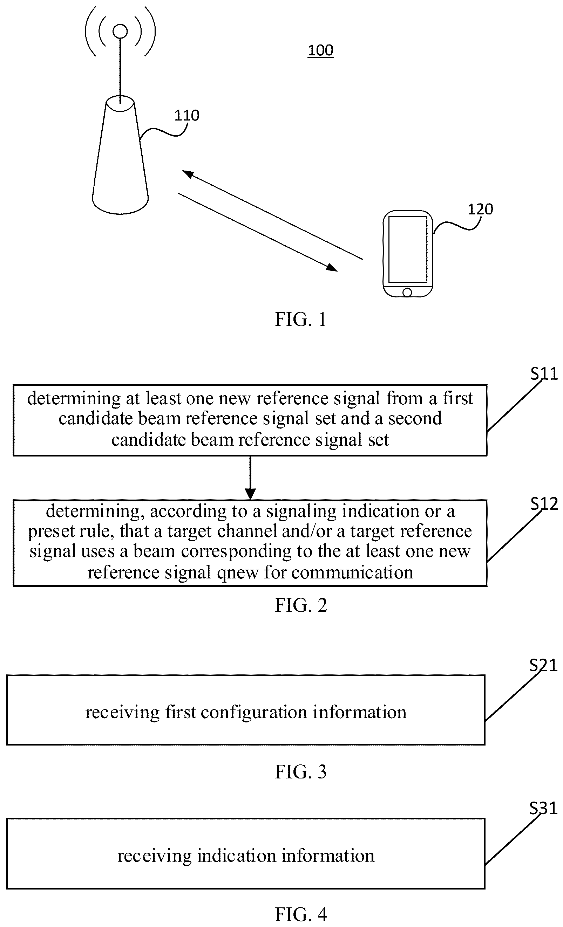

A communication method involved in the present disclosure may be applied to a wireless communication system 100 shown in FIG. 1. The network system may include a network device 110 and a terminal 120. It can be understood that the wireless communication system shown in FIG. 1 is only for schematic illustration, and the wireless communication system may also include other network devices, for example, core network devices, wireless relay devices, and wireless backhaul devices, which are not shown in FIG. 1. The embodiments of the present disclosure do not limit the number of network devices and the number of terminals included in the wireless communication system.

It can be further understood that the wireless communication system of the embodiments of the present disclosure is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier-frequency division multiple access (SC-FDMA), carrier sense multiple access/collision avoidance. According to the capacities, rates, delays and other factors of different networks, the networks may be classified into a second generation (2G) network, a 3G network, a 4G network or future evolution networks, such as a 5th generation wireless communication system (5G) network, and the 5G network may also be called new radio (NR). For the convenience of description, the present disclosure sometimes refers to the wireless communication network as a network.

Further, the network device 110 involved in the present disclosure may also be referred to as a wireless access network device. The wireless access network device may be: a base station, an evolved node B (eNB), a home base station, an access point (AP) in a wireless fidelity (WIFI) system, a wireless relay node, a wireless backhaul node, a transmission point (TP) or a transmission and reception point (TRP), etc. It may also be a gNB in an NR system, or it may also be a component or a part of a device constituting a base station. In a vehicle-to-everything (V2X) communication system, the network device may also be a vehicle-mounted device. It should be understood that in the embodiments of the present disclosure, the specific technology and the specific device form adopted by the network device are not limited.

Furthermore, the terminal 120 involved in the present disclosure may also be referred to as terminal device, user equipment (UE), mobile station (MS), mobile terminal (MT), etc., which is a device that provides voice and/or data connectivity to users. For example, the terminal may be a handheld device with a wireless connection function, a vehicle-mounted device, etc. At present, some examples of terminals include: smart phones (mobile phones), pocket personal computers (PPCs), handheld computers, personal digital assistants (PDAs), laptops, tablet computers, wearable devices, or vehicle-mounted devices, etc. In addition, in a vehicle-to-everything (V2X) communication system, the terminal may also be a vehicle-mounted device. It should be understood that the embodiments of the present disclosure do not limit the specific technology and specific device form adopted by the terminal.

In the embodiments of the present disclosure, the network device 110 and the terminal 120 may use any feasible wireless communication technology to achieve mutual data transmission. A transmission channel corresponding to the data sent by the network device 110 to the terminal 120 is called a downlink (DL) channel, and a transmission channel corresponding to the data sent by the terminal 120 to the network device 110 is called an uplink (UL) channel. It can be understood that the network device involved in the embodiments of the present disclosure may be a base station. Of course, the network device may also be any other possible network device, and the terminal may be any possible terminal, which is not limited by the present disclosure.

In a new radio (NR) network, especially when a communication frequency band is in frequency range 2, since high-frequency channels attenuate quickly, beam-based transmission and reception are required to ensure coverage.

In the traditional method, for reception of a physical downlink control channel (PDCCH), a network device can indicate quasi co-location (QCL) information of the PDCCH by configuring a transmission configuration indication (TCI) state for a control resource set (CORESET). For example, the information may include QCL type D, that is, spatial parameters, also known as beams. After a terminal obtains the TCI state of the CORESET, the terminal may move, which may cause the TCI state obtained by the terminal to be inapplicable. Therefore, the terminal needs to configure a resource for failure detection, such as failure detection resource. For cell-specific failure detection, a beam failure detection resource set is configured for one bandwidth part (BWP) of one serving cell, which may be recorded as q0. For TRP-specific failure detection, two beam failure detection resource sets are configured for one BWP of one serving cell. For example, the first beam failure detection resource set may be recorded as q0,0, while the second beam failure detection resource set may be recorded as q0,1. It can be understood that the two beam failure detection resource sets may each corresponds to one TRP.

In a case where the network device does not configure q0 for the terminal, the terminal needs to determine a resource for failure detection from a channel state information reference signal (CSI-RS) corresponding to one or more TCI states of at least one CORESET. In a case where the network device does not configure q0,0 or q0,1 for the terminal, the terminal may first determine two groups of CORESETs based on a CORESET pool index, and then determine the resource for failure detection in each group from the CSI-RS corresponding to the one or more TCI states of at least one CORESET in each group of CORESETs.

For multiple (M for short) TRPs, there may be two cases. One is to indicate multiple TRP-related transmission resource indications and TCI states through a single (S for short) downlink control information (DCI). However, in this case, the terminal does not know which TRP sent the S-DCI. In other words, the network device does not configure different CORESET pool indexes for different CORESETs. Another is to indicate each TRP-related transmission resource indication and TCI state through M-DCI. In this case, each TRP may send its own TRP-related transmission resource indication and TCI state through its own DCI. Each CORESET in the multiple CORESETs may correspond to one CORESET pool index. Different CORESET pool indexes correspond to different TRPs. Therefore, in this case, the beam failure detection resource set may be determined according to the CORESET contained in the CORESET pool index.

For S-DCI, since the CORESETs are not grouped, it is required to implicitly indicate the beam failure detection resource sets corresponding to different TRPs.

For each beam failure detection resource set, the network device may configure a corresponding candidate beam reference signal set, and when a new reference signal is determined from the candidate beam reference signal set, for example, denoted as qnew, which channels and/or signals use this qnew is still under discussion. The channels and/or signals may include, for example: a PDCCH and/or a demodulation reference signal (DMRS) of the PDCCH, a physical downlink shared channel (PDSCH) and/or a DMRS of the PDSCH, a physical uplink control channel (PUCCH) and/or a DMRS of the PUCCH, a physical uplink shared channel (PUSCH) and/or a DMRS of the PUSCH, a CSI-RS, a sounding reference signal (SRS), a positioning reference signal (PRS), a time-frequency tracking reference signal (TRS), etc.

After qnew is determined from a plurality of candidate beam reference signal sets, how to determine which channels and/or signals use the corresponding determined qnew is a problem that needs to be solved at present.

Therefore, the present disclosure improves a success rate of TRP-based beam failure recovery by determining qnew from a candidate beam reference signal set and determining that a target channel and/or a target reference signal uses a beam corresponding to qnew for communication.

FIG. 2 is a flowchart of a communication method according to an embodiment of the present disclosure. As shown in FIG. 2, the method is performed by a terminal and includes the following steps.

At step S11, at least one new reference signal (qnew) is determined from a first candidate beam reference signal set and a second candidate beam reference signal set.

In some embodiments, the terminal may determine at least one qnew from the first candidate beam reference signal set and/or the second candidate beam reference signal set.

It can be understood that qnew represents one or more reference signals selected from the first candidate beam reference signal set and/or the second candidate beam reference signal set.

At step S12, according to a signaling instruction or a preset rule, it is determined that a target channel and/or a target reference signal uses a beam corresponding to qnew for communication.

In some embodiments, the terminal may determine, based on the signaling instruction, that the target channel and/or target reference signal uses the beam corresponding to qnew for communication.

For example, the terminal may determine, based on the signaling instruction, that the target channel uses the beam corresponding to qnew for communication. The signaling may be a radio resource control (RRC) signaling.

For another example, the terminal may determine, based on the signaling indication, that the target reference signal uses the beam corresponding to qnew for communication. The signaling may be an RRC signaling, or the signaling may be a downlink control information (DCI) signaling.

In some embodiments, the terminal may determine, based on the preset rule, that the target channel and/or the target reference signal uses the beam corresponding to qnew for communication.

For example, the terminal may determine, based on the preset rule, that the target channel uses the beam corresponding to qnew for communication. The preset rule may pre-stipulate that the target channel uses the beam corresponding to qnew.

For another example, the terminal may determine, based on the preset rule, that the target reference signal uses the beam corresponding to qnew for communication. The signaling may be an RRC signaling. The preset rule may pre-stipulate that the target reference signal uses the beam corresponding to qnew.

In some embodiments, the beam may also be at least one of a TCI state, spatial relation information, or a QCL parameter. The QCL parameter may be, for example, QCL type D. That is, the beam may be indicated by at least one of a TCI state, spatial relation information, or a QCL parameter.

The present disclosure improves a success rate of TRP-based beam failure recovery by determining qnew from a candidate beam reference signal set and determining that the target channel and/or the target reference signal uses the beam corresponding to qnew for communication.

In a communication method provided in an embodiment, FIG. 3 is a flowchart of a communication method according to an embodiment of the present disclosure. As shown in FIG. 3, the method includes the following steps.

At step S21, first configuration information is received.

In some embodiments, a terminal may receive the first configuration information. The first configuration information is used to configure a first candidate beam reference signal set and a second candidate beam reference signal set. The first candidate beam reference signal set corresponds to a first failure detection resource set, and the second candidate beam reference signal set corresponds to a second failure detection resource set.

For example, the terminal may receive the first configuration information. The first configuration information includes parameters for configuring the first candidate beam reference signal set and the second candidate beam reference signal set. The terminal determines the first candidate beam reference signal set and the second candidate beam reference signal set based on the above parameters.

That is, the terminal may determine, based on the configuration information, the associated first candidate beam reference signal set and first failure detection resource set, and the associated second candidate beam reference signal set and second failure detection resource set.

In some embodiments, each pair of associated candidate beam reference signal set and failure detection resource set may correspond to one TRP.

The present disclosure improves a success rate of TRP-based beam failure recovery by configuring multiple candidate beam reference signal sets to determine qnew from the candidate beam reference signal sets, and determining that the target channel and/or the target reference signal uses the beam corresponding to the qnew for communication.

In a communication method provided in an embodiment, FIG. 4 is a flowchart of a communication method according to an embodiment of the present disclosure. As shown in FIG. 4, the method includes the following steps.

At step S31, indication information is received.

In some embodiments, a terminal may receive the indication information. The indication information may be used to determine a first unified TCI state and a second unified TCI state.

For example, the terminal receives the indication information. The indication information includes parameters for indicating the first unified TCI state and the second unified TCI state. The terminal determines, based on the above parameters, parameters of the first unified TCI state and the second unified TCI state.

In some embodiments, the unified TCI state may be applicable to transmission of a PDCCH and/or a DMRS of the PDCCH, a PDSCH and/or a DMRS of the PDSCH, a PUCCH and/or a DMRS of the PUCCH, a PUSCH and/or a DMRS of the PUSCH, and/or a reference signal. The reference signal may include CSI-RS, SRS, PRS, TRS, and the like. Which unified TCI state, such as the first unified TCI state, the second unified TCI state, or both the first unified TCI state and the second unified TCI state, or neither the first unified TCI state nor the second unified TCI state, is used for each channel and/or signal may be configured or indicated using separate information for each channel and/or signal, which is not limited in the present disclosure.

In some embodiments, the first unified TCI state may correspond to a first beam failure detection resource set. The second unified TCI state may correspond to a second beam failure detection resource set.

In some embodiments, the first unified TCI state may correspond to the first candidate beam reference signal set. The second unified TCI state may correspond to the second candidate beam reference signal set.

The present disclosure improves a success rate of TRP-based beam failure recovery by indicating multiple unified TCI states to use the corresponding unified TCI state for transmission when a corresponding beam failure detection resource set is transmitted.

In a communication method provided by the embodiments of the present disclosure, the first unified TCI state or the second unified TCI state includes at least one of the following: a joint TCI state; a DL TCI state; or an UL TCI state.

In some embodiments, the first unified TCI state includes a joint TCI state.

The joint TCI state may be used for both DL transmission and UL transmission.

In some embodiments, the first unified TCI state includes a DL TCI state.

In some embodiments, the first unified TCI state includes an UL TCI state.

In some embodiments, the second unified TCI state includes a joint TCI state.

The joint TCI state may be used for both DL transmission and UL transmission.

In some embodiments, the second unified TCI state includes a DL TCI state.

In some embodiments, the second unified TCI state includes an UL TCI state.

In the present disclosure, a representation form of multiple unified TCI state is provided to indicate multiple unified TCI states, and when a corresponding beam failure detection resource set is transmitted, the corresponding unified TCI state is used for transmission, thereby improving a success rate of TRP-based beam failure recovery.

In a communication method provided in the embodiments of the present disclosure, the first failure detection resource set and the second failure detection resource set are determined based on at least one of: receiving second configuration information, in which the second configuration information indicates the first failure detection resource set and the second failure detection resource set; determining the first failure detection resource set and the second failure detection resource set based on an association relationship between a control resource set (CORESET) and the first failure detection resource set and/or the second failure detection resource set, in which the first failure detection resource set includes a reference signal resource corresponding to a TCI state of the CORESET associated with the first failure detection resource set, and the second failure detection resource set includes a reference signal resource corresponding to a TCI state of the CORESET associated with the second failure detection resource set; determining the first failure detection resource set and the second failure detection resource set based on an association relationship between a CORESET and the first candidate beam reference signal set and/or the second candidate beam reference signal set, in which the first failure detection resource set includes a reference signal resource corresponding to a TCI state of the CORESET associated with the first candidate beam reference signal set, and the second failure detection resource set includes a reference signal resource corresponding to a TCI state of the CORESET associated with the second candidate beam reference signal set; or determining the first failure detection resource set and the second failure detection resource set based on the first unified TCI state and the second unified TCI state, in which the first failure detection resource set includes a reference signal resource corresponding to the first unified TCI state, and the second failure detection resource set includes a reference signal resource corresponding to the second unified TCI state.

In some embodiments, the terminal may receive second configuration information, in which the second configuration information indicates the first failure detection resource set and the second failure detection resource set.

For example, the terminal receives second configuration information, the second configuration information including parameters for indicating the first failure detection resource set and the second failure detection resource set. The terminal determines the first failure detection resource set and the second failure detection resource set based on the above parameters.

In some embodiments, the terminal determines the first failure detection resource set and the second failure detection resource set based on an association relationship between a CORESET and the first failure detection resource set and/or the second failure detection resource set, in which the first failure detection resource set includes a reference signal resource corresponding to a TCI state of the CORESET associated with the first failure detection resource set, and the second failure detection resource set includes a reference signal resource corresponding to a TCI state of the CORESET associated with the second failure detection resource set.

Accordingly, the terminal needs to determine the association relationship between the CORESET and the first failure detection resource set and/or the second failure detection resource set. For example, the terminal receives third configuration information of the network device, and determines the association relationship between the CORESET and the first failure detection resource set and/or the second failure detection resource set according to the third configuration information. For another example, a first predefined rule may pre-stipulate the association relationship between the CORESET and the first failure detection resource set and/or the second failure detection resource set. The terminal may determine the association relationship between the CORESET and the first failure detection resource set and/or the second failure detection resource set according to the first predefined rule.

For example, the terminal may determine the first failure detection resource set based on the association relationship between the CORESET and the first failure detection resource set. The first failure detection resource set includes a reference signal resource corresponding to a TCI state of the CORESET associated with the first failure detection resource set. Accordingly, the terminal needs to determine the association relationship between the CORESET and the first failure detection resource set. For example, the terminal receives third configuration information of the network device, and determines the association relationship between the CORESET and the first failure detection resource set according to the third configuration information. For another example, a first predefined rule may pre-stipulate the association relationship between the CORESET and the first failure detection resource set. The terminal may determine the association relationship between the CORESET and the first failure detection resource set according to the first predefined rule.

For example, the terminal may determine the second failure detection resource set based on the association relationship between the CORESET and the second failure detection resource set. The second failure detection resource set includes a reference signal resource corresponding to a TCI state of the CORESET associated with the second failure detection resource set. Accordingly, the terminal needs to determine the association relationship between the CORESET and the second failure detection resource set. For example, the terminal receives third configuration information of the network device, and determines the association relationship between the CORESET and the second failure detection resource set according to the third configuration information. For another example, a first predefined rule may pre-stipulate the association relationship between the CORESET and the second failure detection resource set. The terminal may determine the association relationship between the CORESET and the second failure detection resource set according to the first predefined rule.

For example, the terminal may determine the first failure detection resource set based on the association relationship between the CORESET and the first failure detection resource set. Also, the terminal may determine the second failure detection resource set based on the association relationship between the CORESET and the second failure detection resource set.

Accordingly, the terminal needs to determine the association relationship between the CORESET and the first failure detection resource set, and the association relationship between the CORESET and the second failure detection resource set. For example, the terminal receives configuration information of the network device, and determines, according to the configuration information, the association relationship between the CORESET and the first failure detection resource set, and the association relationship between the CORESET and the second failure detection resource set. For another example, a predefined rule may pre-stipulate the association relationship between the CORESET and the first failure detection resource set, and the association relationship between the CORESET and the second failure detection resource set. The terminal may determine, according to the predefined rule, the association relationship between the CORESET and the first failure detection resource set, and the association relationship between the CORESET and the second failure detection resource set.

In some embodiments, based on the association relationship between the CORESET and the first candidate beam reference signal set and/or the second candidate beam reference signal set, the first failure detection resource set and the second failure detection resource set are determined, in which the first failure detection resource set includes a reference signal resource corresponding to a TCI state of the CORESET associated with the first candidate beam reference signal set, and the second failure detection resource set includes a reference signal resource corresponding to a TCI state of the CORESET associated with the second candidate beam reference signal set. Accordingly, the terminal needs to determine the association relationship between the CORESET and the first candidate beam reference signal set and/or the second candidate beam reference signal set. For example, the terminal receives configuration information of the network device, and determines, according to the configuration information, the association relationship between the CORESET and the first candidate beam reference signal set and/or the second candidate beam reference signal set. For another example, a second predefined rule may pre-stipulate the association relationship between the CORESET and the first candidate beam reference signal set and/or the second candidate beam reference signal set. The terminal may determine the association relationship between the CORESET and the first candidate beam reference signal set and/or the second candidate beam reference signal set according to the second predefined rule.

For example, the terminal may determine the first failure detection resource set based on the association relationship between the CORESET and the first candidate beam reference signal set. The first failure detection resource set includes a reference signal resource corresponding to a TCI state of the CORESET associated with the first candidate beam reference signal set. Accordingly, the terminal needs to determine the association relationship between the CORESET and the first candidate beam reference signal set. For example, the terminal receives configuration information of the network device, and determines the association relationship between the CORESET and the first candidate beam reference signal set based on the configuration information. For another example, a second predefined rule may pre-stipulate the association relationship between the CORESET and the first candidate beam reference signal set. The terminal may determine the association relationship between the CORESET and the first candidate beam reference signal set based on the second predefined rule.

For example, the terminal may determine the second failure detection resource set based on the association relationship between the CORESET and the second candidate beam reference signal set. The second failure detection resource set includes a reference signal resource corresponding to a TCI state of the CORESET associated with the second candidate beam reference signal set. Accordingly, the terminal needs to determine the association relationship between the CORESET and the second candidate beam reference signal set. For example, the terminal receives configuration information of the network device, and determines the association relationship between the CORESET and the second candidate beam reference signal set based on the configuration information. For another example, a second predefined rule may pre-stipulate the association relationship between the CORESET and the second candidate beam reference signal set. The terminal may determine the association relationship between the CORESET and the second candidate beam reference signal set based on the second predefined rule.

For example, the terminal may determine the first failure detection resource set based on the association relationship between the CORESET and the first candidate beam reference signal set. Also, the terminal may determine the second failure detection resource set based on the association relationship between the CORESET and the second candidate beam reference signal set.

In some embodiments, the terminal determines the first failure detection resource set and the second failure detection resource set based on the first unified TCI state and the second unified TCI state, in which the first failure detection resource set includes a reference signal resource corresponding to the first unified TCI state, and the second failure detection resource set includes a reference signal resource corresponding to the second unified TCI state.

For example, the terminal may determine the first failure detection resource set based on the first unified TCI state, in which the first failure detection resource set includes the reference signal resource corresponding to the first unified TCI state.

For example, the terminal may determine the second failure detection resource set based on the second unified TCI state, in which the second failure detection resource set includes the reference signal resource corresponding to the second unified TCI state.

For example, the terminal may determine the first failure detection resource set based on the first unified TCI state. Also, the terminal may determine the second failure detection resource set based on the second unified TCI state.

In some embodiments, the reference signal resource corresponding to the first unified TCI state may be a reference signal corresponding to QCL type D indicated by the first unified TCI state.

In the present disclosure, multiple ways to determine the failure detection resource set are provided. By configuring multiple candidate beam reference signal sets, when a corresponding beam failure detection resource set is transmitted, a corresponding unified TCI state is used for transmission, thereby improving a success rate of TRP-based beam failure recovery.

In a communication method provided by the embodiments of the present disclosure, qnew includes a first qnew and/or a second qnew. Determining the at least one qnew from the first candidate beam reference signal set and/or the second candidate beam reference signal set may include at least one of: in a case that a radio link quality corresponding to the first failure detection resource set is less than a first threshold Qout, and that at least one first candidate reference signal whose radio link quality is greater than a second threshold Qin exists in the first candidate beam reference signal set, determining the at least one first candidate reference signal as the first qnew; or in a case that a radio link quality corresponding to the second failure detection resource set is less than a first threshold Qout, and that at least one second candidate reference signal whose radio link quality is greater than a second threshold Qin exists in the second candidate beam reference signal set, determining the at least one second candidate reference signal as the second qnew.

In some embodiments, qnew may include first qnew, in which the first qnew may be determined from the first candidate reference signal set.

In some embodiments, qnew may include second qnew, in which the second qnew may be determined from the second candidate reference signal set.

In some embodiments, qnew may include first qnew and second qnew.

**In** some embodiments, determining the at least one qnew from the first candidate beam reference signal set and the second candidate beam reference signal set may include: in a case that a radio link quality corresponding to the first failure detection resource set is less than a first threshold Qout, and that at least one first candidate reference signal whose radio link quality is greater than a second threshold Qin exists in the first candidate beam reference signal set, determining the at least one first candidate reference signal as the first qnew.

For example, when at least one reference signal whose radio link quality is less than the first threshold Qout exists in the first failure detection resource set, and at least one first candidate reference signal whose radio link quality is greater than the second threshold Qin exists in the first candidate beam reference signal set, then the at least one first candidate reference signal is determined to be the first qnew.

For another example, when a radio link quality of each reference signal in the first failure detection resource set is less than the first threshold Qout, and at least one first candidate reference signal whose radio link quality is greater than the second threshold Qin exists in the first candidate beam reference signal set, then the at least one first candidate reference signal is determined to be the first qnew.

The above-mentioned radio link quality of the reference signal in the first failure detection resource set may be at least one of layer (L for short) 1-reference signal receiving power (RSRP), L1-signal interference noise ratio (SINR), L3-RSRP, L3-reference signal received quality (RSRQ), L3-SINR, etc. The above-mentioned radio link quality of the reference signal in the first candidate beam reference signal set may be at least one of L1-RSRP, L1-SINR, L3-RSRP, L3-RSRQ, or L3-RSRP.

In some embodiments, determining the at least one qnew from the first candidate beam reference signal set and the second candidate beam reference signal set may include: in a case that a radio link quality corresponding to the second failure detection resource set is less than a first threshold Qout, and that at least one second candidate reference signal whose wireless link quality is greater than a second threshold Qin exists in the second candidate beam reference signal set, determining the at least one first candidate reference signal as the first qnew.

For example, when at least one reference signal whose radio link quality is less than the first threshold Qout exists in the second failure detection resource set, and at least one second candidate reference signal whose radio link quality is greater than the second threshold Qin exists in the second candidate beam reference signal set, then the at least one second candidate reference signal is determined to be the second qnew.

For another example, when a radio link quality of each reference signal in the second failure detection resource set is less than the first threshold Qout, and at least one second candidate reference signal whose radio link quality is greater than the second threshold Qin exists in the second candidate beam reference signal set, then the at least one second candidate reference signal is determined to be the second qnew.

The above-mentioned radio link quality of the reference signal in the second failure detection resource set may be at least one of L1-RSRP, L1-SINR, L3-RSRP, L3-RSRQ, L3-SINR, etc. The above-mentioned radio link quality of the reference signal in the second candidate beam reference signal set may be at least one of L1-RSRP, L1-SINR, L3-RSRP, L3-RSRQ, or L3-RSRP.

In the present disclosure, multiple ways to determine qnew are provided, so as to determine that the target channel and/or the target reference signal uses the beam corresponding to qnew for communication, thereby improving a success rate of TRP-based beam failure recovery.

In a communication method provided by the embodiments of the present disclosure, the target channel and/or the target reference signal may include at least one of: a PDCCH; a DMRS corresponding to the PDCCH; a PDSCH; a DMRS corresponding to the PDSCH; a PUSCH; a DMRS corresponding to the PUSCH; a PUCCH; a DMRS corresponding to the PUCCH; an SRS; or a CSI-RS.

**In** some embodiments, the target channel and/or the target reference signal may include a PDCCH.

In some embodiments, the target channel and/or the target reference signal may include a DMRS corresponding to the PDCCH.

In some embodiments, the target channel and/or the target reference signal may include a PDSCH.

In some embodiments, the target channel and/or the target reference signal may include a DMRS corresponding to the PDSCH.

In some embodiments, the target channel and/or the target reference signal may include a PUSCH.

In some embodiments, the target channel and/or the target reference signal may include a DMRS corresponding to the PUSCH.

In some embodiments, the target channel and/or the target reference signal may include a PUCCH.

In some embodiments, the target channel and/or the target reference signal may include a DMRS corresponding to the PUCCH.

In some embodiments, the target reference signal may include an SRS.

In some embodiments, the target reference signal may include a CSI-RS.

Of course, in some embodiments, the target channel and/or the target reference signal may also include any one or more channels, and/or one or more reference signals mentioned above. For example, the target channel and/or the target reference signal may include: a PDCCH, and a DMRS corresponding to the PDCCH; a PDCCH, a DMRS corresponding to the PDCCH, and a CSI-RS; a PDCCH, a DMRS corresponding to the PDCCH, a PUSCH, and a CSI-RS; a PDCCH, a DMRS corresponding to the PDCCH, a PDSCH, a DMRS corresponding to the PDSCH, and an SRS; a PDCCH, a DMRS corresponding to the PDCCH, a PDSCH, a DMRS corresponding to the PDSCH, an SRS and a CSI-RS; a PDCCH, a DMRS corresponding to the PDCCH, a PDSCH, a DMRS corresponding to the PDSCH, PUSCH, a DMRS corresponding to the PUSCH, and a CSI-RS; a PDCCH, a DMRS corresponding to the PDCCH, a PDSCH, a DMRS corresponding to the PDSCH, a PUSCH, a DMRS corresponding to the PUSCH, an SRS, and a CSI-RS; a PDCCH, a DMRS corresponding to the PDCCH, a PDSCH, a DMRS corresponding to the PDSCH, a PUSCH, a DMRS corresponding to the PUSCH, a PUCCH, a DMRS corresponding to the PUCCH, and a CSI-RS; a PDCCH, a DMRS corresponding to the PDCCH, a PDSCH, a DMRS corresponding to the PDSCH, a PUSCH, a DMRS corresponding to the PUSCH, a PUCCH, a DMRS corresponding to the PUCCH, an SRS, and a CSI-RS. It can be understood that the target channel and/or the target reference signal may also include any one or more of the channels, and/or one or more reference signals mentioned above, which are not listed here for the convenience of description.

The present disclosure is applicable to transmission of a variety of different channels and/or signals, and uses the beam corresponding to qnew for different target channels and/or target reference signals to perform communication, thereby improving a success rate of TRP-based beam failure recovery.

In a communication method provided in the embodiments of the present disclosure, determining, according to the signaling indication or the preset rule, that the target channel and/or the target reference signal uses the beam corresponding to qnew for communication includes at least one of: determining that a first PDCCH uses a beam corresponding to first qnew for communication, in which the target channel is the first PDCCH, a CORESET to which the first PDCCH belongs is configured to adopt the first unified TCI state, and the first qnew corresponds to the first unified TCI state; determining that a second PDCCH uses a beam corresponding to second qnew for communication, in which the target channel is the second PDCCH, a CORESET to which the second PDCCH belongs is configured to adopt the second unified TCI state, and the second qnew corresponds to the second unified TCI state; determining that a third PDCCH uses a beam corresponding to first qnew and/or a beam corresponding to second qnew for communication, in which the target channel is the third PDCCH, a CORESET to which the third PDCCH belongs is configured to adopt the first unified TCI state and the second unified TCI state, the first qnew corresponds to the first unified TCI state, and the second qnew corresponds to the second unified TCI state; determining that the target channel and/or the target reference signal uses a beam corresponding to first qnew for communication, in which the target channel and/or the target reference signal is scheduled by first downlink control information (DCI), the first DCI indicates that the target channel and/or the target reference signal adopts the first unified TCI state, and the first qnew corresponds to the first unified TCI state; determining that the target channel and/or the target reference signal uses a beam corresponding to second qnew for communication, in which the target channel and/or the target reference signal is scheduled by second DCI, the second DCI indicates that the target channel and/or the target reference signal adopts the second unified TCI state, and the second qnew corresponds to the second unified TCI state; or determining that the target channel and/or the target reference signal uses a beam corresponding to first qnew and/or a beam corresponding to second qnew for communication, in which the target channel and/or the target reference signal is scheduled by third DCI, the third DCI indicates that the target channel and/or the target reference signal adopts the first unified TCI state and the second unified TCI state, the first qnew corresponds to the first unified TCI state, and the second qnew corresponds to the second unified TCI state.

In some embodiments, according to the signaling indication or the preset rule, it may be determined that the target channel and/or the target reference signal uses the beam corresponding to qnew for communication as follows. The target channel is a first PDCCH, and a CORESET to which the first PDCCH belongs is configured to adopt the first unified TCI state. It is determined that the first PDCCH uses the beam corresponding to the first qnew for communication. The first qnew corresponds to the first unified TCI state. It should be noted that determining that the first PDCCH uses the beam corresponding to the first qnew for communication can also be understood as determining that a DMRS corresponding to the first PDCCH uses the beam corresponding to the first qnew for communication.

It can be understood that in this embodiment, the PDCCH is configured to use the unified TCI state.

It can be understood that the first qnew is used as an update beam of the first unified TCI state. It can also be understood that a TCI state corresponding to the first qnew is used as the update beam of the first unified TCI state.

In some embodiments, according to the signaling indication or the preset rule, it may be determined that the target channel and/or the target reference signal uses the beam corresponding to qnew for communication as follows. The target channel is a second PDCCH, and a CORESET to which the second PDCCH belongs is configured to adopt the second unified TCI state. It is determined that the second PDCCH uses the beam corresponding to the second qnew for communication. The second qnew corresponds to the second unified TCI state. It should be noted that determining that the second PDCCH uses the beam corresponding to the second qnew for communication can also be understood as determining that a DMRS corresponding to the second PDCCH uses the beam corresponding to the second qnew for communication.

It can be understood that in this embodiment, the PDCCH is configured to use the unified TCI state.

It can be understood that the second qnew is used as an update beam of the second unified TCI state. It can also be understood that a TCI state corresponding to the second qnew is used as the update beam of the second unified TCI state.

In some embodiments, according to the signaling indication or the preset rule, it may be determined that the target channel and/or the target reference signal uses the beam corresponding to qnew for communication as follows. The target channel is a third PDCCH, and a CORESET to which the third PDCCH belongs is configured to adopt the first unified TCI state and the second unified TCI state. It is determined that the third PDCCH uses the beam corresponding to the first qnew and/or the beam corresponding to the second qnew for communication. The first qnew corresponds to the first unified TCI state. The second qnew corresponds to the second unified TCI state. It should be noted that determining that the third PDCCH uses the beam corresponding to the first qnew and/or the beam corresponding to the second qnew for communication can also be understood as determining that a DMRS corresponding to the second PDCCH uses the beam corresponding to the first qnew and/or the beam corresponding to the second qnew for communication.

It can be understood that in this embodiment, the PDCCH is configured to use the unified TCI state.

It can be understood that in this embodiment, if a beam failure is detected for only the first failure detection resource set, that is, a radio link quality of a reference signal in the first failure detection resource set is less than Qout, for this PDCCH, the terminal may use the first qnew and the second unified TCI state. This is because no beam failure occurs in the second failure detection resource set. Therefore, the second unified TCI state can continue to be used. Similarly, if a beam failure is detected for only the second failure detection resource set, the terminal may use the second qnew and the first unified TCI state. In some cases, only when the beam failure is detected for both the first failure detection resource set and the second failure detection resource set, the terminal may use the first qnew and the second qnew.

In some embodiments, according to the signaling indication or the preset rule, it may be determined that the target channel and/or the target reference signal uses the beam corresponding to qnew for communication as follows. The target channel and/or the target reference signal is scheduled by first DCI, the first DCI indicates that the target channel and/or the target reference signal adopts the first unified TCI state, it is determined that the target channel and/or the target reference signal uses the beam corresponding to the first qnew for communication, and the first qnew corresponds to the first unified TCI state. In this case, the target channel and/or the target reference signal includes at least one of the following: a PDSCH and/or a DMRS corresponding to the PDSCH, a dynamic grant or configured grant type 2 PUSCH and/or a DMRS corresponding to the PUSCH, an aperiodic PUCCH and/or a DMRS corresponding to the PUCCH, an aperiodic CSI-RS, or an aperiodic SRS. The first DCI may, for example, include at least one of DCI format 0_1, DCI format 0_2, DCI format 1_1, or DCI format 1_2.

It can be understood that the first qnew is used to replace the first unified TCI state. That is, the first unified TCI state corresponds to the first failure detection resource set, and the first qnew is selected from the first candidate beam reference signal set, also the first candidate beam reference signal set is associated with the first failure detection resource set. Therefore, the first qnew is used to replace the first unified TCI state.

In some embodiments, according to the signaling indication or the preset rule, it may be determined that the target channel and/or the target reference signal uses the beam corresponding to qnew for communication as follows. The target channel and/or the target reference signal is scheduled by second DCI, the second DCI indicates that the target channel and/or the target reference signal adopts the second unified TCI state, it is determined that the target channel and/or the target reference signal uses the beam corresponding to the second qnew for communication, and the second qnew corresponds to the second unified TCI state. In this case, the target channel and/or the target reference signal includes at least one of the following: a PDSCH and/or a DMRS corresponding to the PDSCH, a dynamic grant or configured grant type 2 PUSCH and/or a DMRS corresponding to the PUSCH, an aperiodic PUCCH and/or a DMRS corresponding to the PUCCH, an aperiodic CSI-RS, or an aperiodic SRS. The second DCI may, for example, include at least one of DCI format 0_1, DCI format 0_2, DCI format 1_1, or DCI format 1_2.

It can be understood that the second qnew is used to replace the second unified TCI state. That is, the second unified TCI state corresponds to the second failure detection resource set, and the second qnew is selected from the second candidate beam reference signal set, also the second candidate beam reference signal set is associated with the second failure detection resource set. Therefore, the second qnew is used to replace the second unified TCI state.

In some embodiments, according to the signaling indication or the preset rule, it may be determined that the target channel and/or the target reference signal uses the beam corresponding to qnew for communication as follows. The target channel and/or the target reference signal is scheduled by third DCI, the third DCI indicates that the target channel and/or the target reference signal adopts the first unified TCI state and the second unified TCI state, it is determined that the target channel and/or the target reference signal uses the beam corresponding to the first qnew and/or the beam corresponding to the second qnew for communication, the first qnew corresponds to the first unified TCI state and the second qnew corresponds to the second unified TCI state. In this case, the target channel and/or the target reference signal includes at least one of the following: a PDSCH and/or a DMRS corresponding to the PDSCH, a dynamic grant or configured grant type 2 PUSCH and/or a DMRS corresponding to the PUSCH, an aperiodic PUCCH and/or a DMRS corresponding to the PUCCH, an aperiodic CSI-RS, or an aperiodic SRS. The third DCI may, for example, include at least one of DCI format 0_1, DCI format 0_2, DCI format 1_1, or DCI format 1_2.

It can be understood that in this embodiment, if a beam failure is detected for only the first failure detection resource set, that is, a radio link quality of a reference signal in the first failure detection resource set is less than Qout, for such target channel and/or target reference signal, the terminal may use the first qnew and the second unified TCI state. This is because no beam failure occurs in the second failure detection resource set. Therefore, the second unified TCI state can continue to be used. Similarly, if a beam failure is detected for only the second failure detection resource set, the terminal may use the second qnew and the first unified TCI state. In some cases, only when the beam failure is detected for both the first failure detection resource set and the second failure detection resource set, the terminal may use the first qnew and the second qnew.

The present disclosure provides a variety of situations where the target channels and/or target reference signals use corresponding qnew, thereby improving a success rate of TRP-based beam failure recovery.

In a communication method provided in the embodiments of the present disclosure, determining, according to the signaling indication or the preset rule, that the target channel and/or the target reference signal uses the beam corresponding to qnew for communication includes at least one of: receiving first RRC configuration information indicating that a first channel and/or a first reference signal uses a beam corresponding to first qnew for communication, in which the target channel and/or the target reference signal is the first channel and/or the first reference signal; receiving second RRC configuration information indicating that a second channel and/or a second reference signal uses a beam corresponding to second qnew for communication, in which the target channel and/or the target reference signal is the second channel and/or the second reference signal; or receiving third RRC configuration information indicating that a third channel and/or a third reference signal uses a beam corresponding to first qnew and/or a beam corresponding to second qnew for communication, in which the target channel and/or the target reference signal is the third channel and/or the third reference signal.

In some embodiments, it may be determined, according to the signaling indication or the preset rule, that the target channel and/or the target reference signal uses the beam corresponding to qnew for communication as follows. The target channel and/or the target reference signal is a first channel and/or a first reference signal, and first RRC configuration information is received. The first RRC configuration information indicates that the first channel and/or the first reference signal uses the beam corresponding to the first qnew for communication.

For example, the first RRC configuration information is used to configure that the first channel and/or the first reference signal corresponds to the first qnew. For example, one or more of the PDSCH, the PUSCH, the DMRS corresponding to the PDSCH, or the DMRS corresponding to the PUSCH scheduled by the DCI that does not contain a TCI selection field may be included. The DCI may be, for example, DCI format 0_0 or DCI format 1_0. For another example, one or more of the configured grant (CG) Type I PUSCH, the PUCCH, the DMRS corresponding to the PUSCH, the DMRS corresponding to the PUCCH, the CSI-RS, or the SRS that are not scheduled by the DCI may be included. For another example, one or more of the PDCCH or the DMRS corresponding to the PDCCH may be included. It can be understood that in this embodiment, the PDCCH is not configured to use the unified TCI state.

In some embodiments, it may be determined, according to the signaling indication or the preset rule, that the target channel and/or the target reference signal uses the beam corresponding to qnew for communication as follows. The target channel and/or the target reference signal is a second channel and/or a second reference signal, and second RRC configuration information is received. The second RRC configuration information indicates that the second channel and/or the second reference signal uses the beam corresponding to the second qnew for communication.

For example, the second RRC configuration information is used to configure that the second channel and/or the second reference signal corresponds to the second qnew. For example, one or more of the PDSCH, the PUSCH, the DMRS corresponding to the PDSCH, or the DMRS corresponding to the PUSCH scheduled by the DCI that does not contain a TCI selection field may be included. The DCI may be, for example, DCI format 0_0 or DCI format 1_0. For another example, one or more of the CG Type I PUSCH, the PUCCH, the DMRS corresponding to the PUSCH, the DMRS corresponding to the PUCCH, the CSI-RS, or the SRS that are not scheduled by the DCI may be included. For another example, one or more of the PDCCH or the DMRS corresponding to the PDCCH may be included. It can be understood that in this embodiment, the PDCCH is not configured to use the unified TCI state.

In some embodiments, it may be determined, according to the signaling indication or the preset rule, that the target channel and/or the target reference signal uses the beam corresponding to qnew for communication as follows. The target channel and/or the target reference signal is a third channel and/or a third reference signal, and third RRC configuration information is received. The third RRC configuration information indicates that the third channel and/or the third reference signal uses the beam corresponding to the first qnew and/or the beam corresponding to the second qnew for communication.

For example, the third RRC configuration information is used to configure that the third channel and/or the third reference signal corresponds to the first qnew and/or the second qnew. For example, one or more of the PDSCH, the PUSCH, the DMRS corresponding to the PDSCH, or the DMRS corresponding to the PUSCH scheduled by the DCI that does not contain a TCI selection field may be included. The DCI may be, for example, DCI format 0_0 or DCI format 1_0. For another example, one or more of the CG Type I PUSCH, the PUCCH, the DMRS corresponding to the PUSCH, the DMRS corresponding to the PUCCH, the CSI-RS, or the SRS not scheduled by the DCI may be included. For another example, one or more of the PDCCH or the DMRS corresponding to the PDCCH may be included. It can be understood that in this embodiment, the PDCCH is not configured to use the unified TCI state.

The present disclosure provides a variety of situations where target channels and/or target reference signals use corresponding qnew, thereby improving a success rate of TRP-based beam failure recovery.

In a communication method provided by the embodiments of the present disclosure, the method further includes: determining a path loss corresponding to transmission of the target channel and/or the target reference signal based on qnew. The target channel and/or the target reference signal includes at least one of the following: a PUCCH; a DMRS corresponding to the PUCCH; a PUSCH; a DMRS corresponding to the PUSCH; or an SRS.

In some embodiments, the terminal may determine the path loss corresponding to the transmission of the target channel and/or the target reference signal based on qnew.

For example, the terminal may determine qnew as a path loss reference signal for measuring the path loss.

**In** some embodiments, the target channel and/or the target reference signal may include a PUCCH.

**In** some embodiments, the target channel and/or the target reference signal may include a DMRS corresponding to the PUCCH.

**In** some embodiments, the target channel and/or the target reference signal may include a PUSCH.

In some embodiments, the target channel and/or the target reference signal may include a DMRS corresponding to the PUSCH.

In some embodiments, the target reference signal may include an SRS.

In some embodiments, the target channel and/or the target reference signal may also include any one or more channels, and/or one or more reference signals mentioned above. For example, the target channel and/or the target reference signal may include: a PUCCH, and a DMRS corresponding to the PUCCH; a PUSCH, a DMRS corresponding to the PUSCH, and an SRS; a PUCCH, a DMRS corresponding to the PUCCH, a PUSCH, and a DMRS corresponding to the PUSCH; a PUCCH, a DMRS corresponding to the PUCCH, a PUSCH, a DMRS corresponding to the PUSCH, and an SRS. It can be understood that the target channel and/or the target reference signal may also include any one or more of the channels, and/or one or more reference signals mentioned above, which are not listed here for the convenience of description.

In some embodiments, in a case that the target channel and/or the target reference signal is any one or more of the above channels, and/or any one or more of the above signals, the terminal may also determine the path loss corresponding to the transmission of the target channel and/or the target reference signal based on qnew.

For example, in a case that the target channel and/or the target reference signal is the PUCCH, the terminal may also determine the path loss corresponding to the transmission of the target channel and/or the target reference signal based on qnew. It can be understood that in this example, the PDCCH may be configured to use the unified TCI state.

For another example, in a case that the target channel and/or the target reference signal is the DMRS corresponding to the PUCCH, the terminal may also determine the path loss corresponding to the transmission of the target channel and/or the target reference signal based on qnew. It can be understood that in this example, the PDCCH may be configured to use the unified TCI state.

For another example, in a case that the target channel and/or the target reference signal is the PUSCH, the terminal may also determine the path loss corresponding to the transmission of the target channel and/or the target reference signal based on qnew.

For another example, in a case that the target channel and/or the target reference signal is the DMRS corresponding to the PUSCH, the terminal may also determine the path loss corresponding to the transmission of the target channel and/or the target reference signal based on qnew.

For another example, in a case that the target channel and/or the target reference signal is the SRS, the terminal may also determine the path loss corresponding to the transmission of the target channel and/or the target reference signal based on qnew.

In the present disclosure, the path loss may be determined based on qnew in various situations, which improves a success rate of TRP-based beam failure recovery when the target channel and/or the target reference signal uses the corresponding qnew.

In a communication method provided in the embodiments of the present disclosure, determining, according to the signaling indication or the preset rule, that the target channel and/or the target reference signal uses the beam corresponding to qnew for communication includes at least one of: receiving fourth RRC configuration information used to determine that the target channel and/or the target reference signal uses a beam corresponding to first qnew for communication, in which the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state; or receiving fifth RRC configuration information used to determine that the target channel and/or the target reference signal uses a beam corresponding to second qnew for communication, in which the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state.

In some embodiments, the target channel and/or the target reference signal is at least one of the PDCCH, the DMRS corresponding to the PDCCH, the CSI-RS, or the SRS, and the target channel and/or the target reference signal is not configured to use the first unified TCI state or the second unified TCI state. The terminal may receive fourth RRC configuration information. The fourth RRC configuration information is used to determine that the target channel and/or the target reference signal uses the beam corresponding to the first qnew for communication.

For example, at least one of the PDCCH, the DMRS corresponding to the PDCCH, the CSI-RS, or the SRS is not configured to use the first unified TCI state or the second unified TCI state, but uses a separately configured TCI state. In this case, the terminal may receive the fourth RRC configuration information. And through the fourth RRC configuration information, it is determined that at least one of the PDCCH, the DMRS corresponding to the PDCCH, the CSI-RS, or the SRS uses the beam corresponding to the first qnew for communication.

In some embodiments, the target channel and/or the target reference signal is at least one of the PDCCH, the DMRS corresponding to the PDCCH, the CSI-RS, or the SRS, and the target channel and/or the target reference signal is not configured to use the first unified TCI state or the second unified TCI state. The terminal may receive fifth RRC configuration information. The fifth RRC configuration information is used to determine that the target channel and/or the target reference signal uses the beam corresponding to the second qnew for communication.

For example, at least one of the PDCCH, the DMRS corresponding to the PDCCH, the CSI-RS, or the SRS is not configured to use the first unified TCI state or the second unified TCI state, but uses a separately configured TCI state. In this case, the terminal may receive the fifth RRC configuration information. And through the fifth RRC configuration information, it is determined that at least one of the PDCCH, the DMRS corresponding to the PDCCH, the CSI-RS, or the SRS uses the beam corresponding to the second qnew for communication.

The present disclosure may also be applied to channels and/or signals that are not configured with the unified TCI state, so that a success rate of TRP-based beam failure recovery is improved when the target channel and/or the target reference signal uses the corresponding qnew.

In a communication method provided in the embodiments of the present disclosure, the method further includes: sending a scheduling request for beam failure recovery; and/or sending a PUSCH, in which the PUSCH carries an uplink media access control control element (UL MAC CE), and the UL MAC CE indicates the at least one new reference signal qnew and at least one of: an identifier of the first failure detection resource set; an identifier of the first candidate beam reference signal set; an identifier of the second failure detection resource set; or an identifier of the second candidate beam reference signal set.

In some embodiments, the terminal may send a scheduling request for beam failure recovery.

It can be understood that the scheduling request for beam failure recovery may be used to inform the network device that a beam failure occurs and to request beam failure recovery.

In some embodiments, the terminal may send a PUSCH. The PUSCH carries an UL MAC CE. The UL MAC CE may indicate qnew and an identifier of the first failure detection resource set.

In some embodiments, the terminal may send a PUSCH. The PUSCH carries an UL MAC CE. The UL MAC CE may indicate qnew and an identifier of the first candidate beam reference signal set.

In some embodiments, the terminal may send a PUSCH. The PUSCH carries an UL MAC CE. The UL MAC CE may indicate qnew and an identifier of the second failure detection resource set.

In some embodiments, the terminal may send a PUSCH. The PUSCH carries an UL MAC CE. The UL MAC CE may indicate qnew and an identifier of the second candidate beam reference signal set.

In some embodiments, the terminal may send a PUSCH. The PUSCH carries an UL MAC CE. The UL MAC CE may indicate qnew. Further, the UL MAC CE may indicate any one of more of an identifier of the first failure detection resource set, an identifier of the first candidate beam reference signal set, an identifier of the second failure detection resource set, or an identifier of the second candidate beam reference signal set.

In some embodiments, the identifier may be, for example, an identity (ID) or an index.

The terminal in the present disclosure may send information indicating qnew, so that other devices may, based on qnew, use the beam corresponding to qnew for communication in the target channel and/or the target reference signal, thereby improving a success rate of TRP-based beam failure recovery.

In a communication method provided in the embodiments of the present disclosure, the indication information may include a MAC CE. At least one unified TCI state indicated by the MAC CE corresponds to a code point in a TCI state indication field carried in the DCI.

In a communication method provided in the embodiments of the present disclosure, the indication information may include a MAC CE. The MAC CE may indicate at least one unified TCI state. The at least one unified TCI state indicated by the MAC CE may correspond to one code point in a TCI state indication field carried in the DCI.

The present disclosure provides a possible implementation of the indication information, thereby indicating at least one unified TCI state, so that when a corresponding beam failure detection resource set is transmitted, the corresponding unified TCI state is used for transmission, thereby improving a success rate of TRP-based beam failure recovery.

In a communication method provided in the embodiments of the present disclosure, the indication information may include a MAC CE and a DCI. The MAC CE indicates at least one unified TCI state corresponding to each of a plurality of code points corresponding to a TCI state indication field carried in the DCI, and the TCI state indication field carried in the DCI indicates one of the plurality of code points.

In some embodiments, the indication information may include a MAC CE. The MAC CE may indicate at least one unified TCI state corresponding to each of multiple code points. The multiple code points may be multiple code points that may exist in the TCI state indication field carried in the DCI. The TCI state indication field carried in the DCI may indicate one of the multiple code points, thus further indicates at least one unified TCI state corresponding to the code point.

The present disclosure provides a possible implementation of the indication information, thereby indicating at least one unified TCI state, so that when a corresponding beam failure detection resource set is transmitted, the corresponding unified TCI state is used for transmission, thereby improving a success rate of TRP-based beam failure recovery.

In a communication method provided in the embodiments of the present disclosure, at least one CORESET corresponding to the terminal is not configured with different CORESET pool indexes.

In some embodiments, at least one CORESET corresponding to the terminal may be a CORESET that is not configured with a CORESET pool index.

For example, all CORESETs corresponding to the terminal may be included, which may be CORESETs that are not configured with CORESET pool indexes.

Therefore, it can be understood that at least one CORESE corresponding to the terminal is not configured with different CORESET pool indexes, which may be a situation where the S-DCI is used to indicate the beam in the M-TRP.

The present disclosure is applicable to the situation where the M-TRP uses S-DCI to indicate the beam, so that in this situation, by determining qnew from a candidate beam reference signal set and determining that the target channel and/or the target reference signal uses the beam corresponding to qnew for communication, a success rate of TRP-based beam failure recovery is improved.

Based on the same concept, the present disclosure also provides a communication method performed by a network device side.

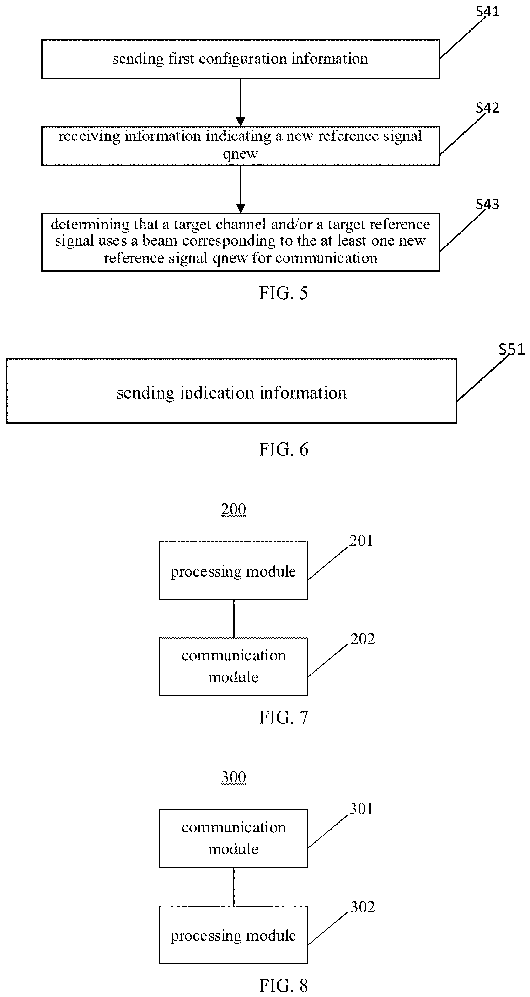

FIG. 5 is a flow chart of a communication method according to an embodiment. As shown in FIG. 5, the method is performed by a network device and may include the following steps.

At step S41, first configuration information is sent.

In some embodiments, the network device may send the first configuration information. The first configuration information is used to instruct a terminal to configure a first candidate beam reference signal set and/or a second candidate beam reference signal set.

At step S42, information for indicating a new reference signal qnew is received.

In some embodiments, the network device may receive information for indicating qnew, in which the qnew is determined by the terminal from the first candidate beam reference signal set and/or the second candidate beam reference signal set.

It can be understood that qnew represents one or more reference signals selected from the first candidate beam reference signal set and/or the second candidate beam reference signal set.

At step S43, it is determined that the target channel and/or the target reference signal uses a beam corresponding to qnew for communication.

**In** some embodiments, the network device may determine that the target channel and/or the target reference signal uses the beam corresponding to qnew for communication.

For example, the network device may determine that the target channel uses the beam corresponding to qnew for communication.

For another example, the network device may determine that the target reference signal uses the beam corresponding to qnew for communication.

In some embodiments, the network device may determine that the target channel and/or the target reference signal uses the beam corresponding to qnew for communication.

The present disclosure improves a success rate of TRP-based beam failure recovery by determining qnew from a candidate beam reference signal set and determining that the target channel and/or the target reference signal uses the beam corresponding to qnew for communication.

In a communication method provided by the embodiments of the present disclosure, the first candidate beam reference signal set corresponds to a first failure detection resource set, and the second candidate beam reference signal set corresponds to a second failure detection resource set.

In some embodiments, the first candidate beam reference signal set corresponds to the first failure detection resource set.

In some embodiments, the second candidate beam reference signal set corresponds to the second failure detection resource set.

In some embodiments, each associated candidate beam reference signal set and failure detection resource set may correspond to one TRP.

The present disclosure improves a success rate of TRP-based beam failure recovery by configuring multiple candidate beam reference signal sets to determine qnew from the candidate beam reference signal sets, and determining that the target channel and/or the target reference signal uses the beam corresponding to the qnew for communication.

In a communication method provided in an embodiment, FIG. 6 is a flowchart of a communication method according to an embodiment of the present disclosure. As shown in FIG. 6, the method includes the following steps.

At step S51, indication information is sent.

In some embodiments, a network device may send the indication information. The indication information may be used to determine a first unified TCI state and a second unified TCI state.

For example, the network device sends the indication information. The indication information includes parameters for indicating the first unified TCI state and the second unified TCI state. The terminal determines, based on the above parameters, parameters of the first unified TCI state and the second unified TCI state.

In some embodiments, the unified TCI state may be applicable to transmission of a PDCCH and/or a DMRS of the PDCCH, a PDSCH and/or a DMRS of the PDSCH, a PUCCH and/or a DMRS of the PUCCH, a PUSCH and/or a DMRS of the PUSCH, and/or a reference signal. The reference signal may include CSI-RS, SRS, PRS, TRS, and the like. Which unified TCI state, such as the first unified TCI state, the second unified TCI state, or both the first unified TCI state and the second unified TCI state, or neither the first unified TCI state nor the second unified TCI state, is used for each channel and/or signal may be configured or indicated using separate information for each channel and/or signal, which is not limited in the present disclosure.

In some embodiments, the first unified TCI state may correspond to a first beam failure detection resource set. The second unified TCI state may correspond to a second beam failure detection resource set.

In some embodiments, the first unified TCI state may correspond to the first candidate beam reference signal set. The second unified TCI state may correspond to the second candidate beam reference signal set.

The present disclosure improves a success rate of TRP-based beam failure recovery by indicating multiple unified TCI states to use the corresponding unified TCI state for transmission when a corresponding beam failure detection resource set is transmitted.

In a communication method provided by the embodiments of the present disclosure, the first unified TCI state or the second unified TCI state includes at least one of the following: a joint TCI state; a DL TCI state; or an UL TCI state.

In some embodiments, the first unified TCI state includes a joint TCI state.

The joint TCI state may be used for both DL transmission and UL transmission.

In some embodiments, the first unified TCI state includes a DL TCI state.

In some embodiments, the first unified TCI state includes an UL TCI state.

In some embodiments, the second unified TCI state includes a joint TCI state.

The joint TCI state may be used for both DL transmission and UL transmission.

In some embodiments, the second unified TCI state includes a DL TCI state.

In some embodiments, the second unified TCI state includes an UL TCI state.

In the present disclosure, a representation form of multiple unified TCI state is provided to indicate multiple unified TCI states, and when a corresponding beam failure detection resource set is transmitted, the corresponding unified TCI state is used for transmission, thereby improving a success rate of TRP-based beam failure recovery.

In a communication method provided in the embodiments of the present disclosure, the first failure detection resource set and the second failure detection resource set are determined based on at least one of: configuring the first failure detection resource set and the second failure detection resource set, and sending second configuration information, in which the second configuration information indicates the first failure detection resource set and the second failure detection resource set; determining the first failure detection resource set and the second failure detection resource set based on an association relationship between a control resource set (CORESET) and the first failure detection resource set and/or the second failure detection resource set, in which the first failure detection resource set includes a reference signal resource corresponding to a TCI state of the CORESET associated with the first failure detection resource set, and the second failure detection resource set includes a reference signal resource corresponding to a TCI state of the CORESET associated with the second failure detection resource set; determining the first failure detection resource set and the second failure detection resource set based on an association relationship between a CORESET and the first candidate beam reference signal set and/or the second candidate beam reference signal set, in which the first failure detection resource set includes a reference signal resource corresponding to a TCI state of the CORESET associated with the first candidate beam reference signal set, and the second failure detection resource set includes a reference signal resource corresponding to a TCI state of the CORESET associated with the second candidate beam reference signal set; or determining the first failure detection resource set and the second failure detection resource set based on the first unified TCI state and the second unified TCI state, in which the first failure detection resource set includes a reference signal resource corresponding to the first unified TCI state, and the second failure detection resource set includes a reference signal resource corresponding to the second unified TCI state.

In some embodiments, the network device may configure the first failure detection resource set and the second failure detection resource set, and generate and send second configuration information, in which the second configuration information indicates the first failure detection resource set and the second failure detection resource set.

In some embodiments, the network device determines the first failure detection resource set and the second failure detection resource set based on an association relationship between a CORESET and the first failure detection resource set and/or the second failure detection resource set, in which the first failure detection resource set includes a reference signal resource corresponding to a TCI state of the CORESET associated with the first failure detection resource set, and the second failure detection resource set includes a reference signal resource corresponding to a TCI state of the CORESET associated with the second failure detection resource set.

Accordingly, the network device may configure the association relationship between the CORESET and the first failure detection resource set and/or the second failure detection resource set. For example, the network device configures the association relationship between the CORESET and the first failure detection resource set and/or the second failure detection resource set. The network device may send third configuration information for indicating the association relationship between the CORESET and the first failure detection resource set and/or the second failure detection resource set to the terminal.

For example, the network device may determine the first failure detection resource set based on the association relationship between the CORESET and the first failure detection resource set. The first failure detection resource set includes a reference signal resource corresponding to a TCI state of the CORESET associated with the first failure detection resource set. Accordingly, the network device may configure the association relationship between the CORESET and the first failure detection resource set. The network device may further send third configuration information for indicating the association relationship between the CORESET and the first failure detection resource set to the terminal.

For example, the network device may determine the second failure detection resource set based on the association relationship between the CORESET and the second failure detection resource set. The second failure detection resource set includes a reference signal resource corresponding to a TCI state of the CORESET associated with the second failure detection resource set. Accordingly, the network device may configure the association relationship between the CORESET and the second failure detection resource set. The network device may further send third configuration information for indicating the association relationship between the CORESET and the second failure detection resource set to the terminal.

For example, the network device may determine the first failure detection resource set based on the association relationship between the CORESET and the first failure detection resource set. Also, the network device may determine the second failure detection resource set based on the association relationship between the CORESET and the second failure detection resource set. Accordingly, the network device may configure the association relationship between the CORESET and the first failure detection resource set, and the association relationship between the CORESET and the second failure detection resource set. The network device may send third configuration information for indicating the association relationship between the CORESET and the first failure detection resource set and the association relationship between the CORESET and the second failure detection resource set to the terminal.

In some embodiments, based on the association relationship between the CORESET and the first candidate beam reference signal set and/or the second candidate beam reference signal set, the first failure detection resource set and the second failure detection resource set are determined, in which the first failure detection resource set includes a reference signal resource corresponding to a TCI state of the CORESET associated with the first candidate beam reference signal set, and the second failure detection resource set includes a reference signal resource corresponding to a TCI state of the CORESET associated with the second candidate beam reference signal set. Accordingly, the network device may configure the association relationship between the CORESET and the first candidate beam reference signal set and/or the second candidate beam reference signal set. For example, he network device may configure the association relationship between the CORESET and the first candidate beam reference signal set and/or the second candidate beam reference signal set. The network device may further send fourth configuration information for indicating the association relationship between the CORESET and the first candidate beam reference signal set and/or the second candidate beam reference signal set to the terminal.

For example, the network device may determine the first failure detection resource set based on the association relationship between the CORESET and the first candidate beam reference signal set. The first failure detection resource set includes a reference signal resource corresponding to a TCI state of the CORESET associated with the first candidate beam reference signal set. Accordingly, the network device may configure the association relationship between the CORESET and the first failure detection resource set. The network device may further send fourth configuration information for indicating the association relationship between the CORESET and the first failure detection resource set to the terminal.

For example, the network device may determine the second failure detection resource set based on the association relationship between the CORESET and the second candidate beam reference signal set. The second failure detection resource set includes a reference signal resource corresponding to a TCI state of the CORESET associated with the second candidate beam reference signal set. Accordingly, the network device may configure the association relationship between the CORESET and the second failure detection resource set. The network device may further send fourth configuration information for indicating the association relationship between the CORESET and the second failure detection resource set to the terminal.

For example, the network device may determine the first failure detection resource set based on the association relationship between the CORESET and the first candidate beam reference signal set. Also, the network device may determine the second failure detection resource set based on the association relationship between the CORESET and the second candidate beam reference signal set. Accordingly, the network device may configure the association relationship between the CORESET and the second failure detection resource set, and the association relationship between the CORESET and the second failure detection resource set. The network device may further send fourth configuration information for indicating the association relationship between the CORESET and the second failure detection resource set and the association relationship between the CORESET and the second failure detection resource set to the terminal.

In some embodiments, the network device determines the first failure detection resource set and the second failure detection resource set based on the first unified TCI state and the second unified TCI state, in which the first failure detection resource set includes a reference signal resource corresponding to the first unified TCI state, and the second failure detection resource set includes a reference signal resource corresponding to the second unified TCI state.

For example, the network device may determine the first failure detection resource set based on the first unified TCI state, in which the first failure detection resource set includes the reference signal resource corresponding to the first unified TCI state.

For example, the network device may determine the second failure detection resource set based on the second unified TCI state, in which the second failure detection resource set includes the reference signal resource corresponding to the second unified TCI state.

For example, the network device may determine the first failure detection resource set based on the first unified TCI state. Also, the network device may determine the second failure detection resource set based on the second unified TCI state.

In some embodiments, the reference signal resource corresponding to the first unified TCI state may be a reference signal corresponding to QCL type D indicated by the first unified TCI state.

In the present disclosure, multiple ways to determine the failure detection resource set are provided. By configuring multiple candidate beam reference signal sets, when a corresponding beam failure detection resource set is transmitted, a corresponding unified TCI state is used for transmission, thereby improving a success rate of TRP-based beam failure recovery.

In a communication method provided by the embodiments of the present disclosure, qnew includes a first qnew and/or a second qnew. Determining the at least one qnew from the first candidate beam reference signal set and/or the second candidate beam reference signal set may include at least one of: in a case that a radio link quality corresponding to the first failure detection resource set is less than a first threshold Qout, and that at least one first candidate reference signal whose radio link quality is greater than a second threshold Qin exists in the first candidate beam reference signal set, determining the at least one first candidate reference signal as the first qnew; or in a case that a radio link quality corresponding to the second failure detection resource set is less than a first threshold Qout, and that at least one second candidate reference signal whose radio link quality is greater than a second threshold Qin exists in the second candidate beam reference signal set, determining the at least one second candidate reference signal as the second qnew.

In some embodiments, qnew may include first qnew, in which the first qnew may be determined from the first candidate reference signal set.

In some embodiments, qnew may include second qnew, in which the second qnew may be determined from the second candidate reference signal set.

In some embodiments, qnew may include first qnew and second qnew.

In some embodiments, determining the at least one qnew from the first candidate beam reference signal set and the second candidate beam reference signal set may include: in a case that a radio link quality corresponding to the first failure detection resource set is less than a first threshold Qout, and that at least one first candidate reference signal whose radio link quality is greater than a second threshold Qin exists in the first candidate beam reference signal set, determining the at least one first candidate reference signal as the first qnew.

For example, when at least one reference signal whose radio link quality is less than the first threshold Qout exists in the first failure detection resource set, and at least one first candidate reference signal whose radio link quality is greater than the second threshold Qin exists in the first candidate beam reference signal set, then the at least one first candidate reference signal is determined to be the first qnew.

For another example, when a radio link quality of each reference signal in the first failure detection resource set is less than the first threshold Qout, and at least one first candidate reference signal whose radio link quality is greater than the second threshold Qin exists in the first candidate beam reference signal set, then the at least one first candidate reference signal is determined to be the first qnew.

The above-mentioned radio link quality of the reference signal in the first failure detection resource set may be at least one of L1-RSRP, L1-SINR, L3-RSRP, L3-RSRQ, L3-SINR, etc. The above-mentioned radio link quality of the reference signal in the first candidate beam reference signal set may be at least one of L1-RSRP, L1-SINR, L3-RSRP, L3-RSRQ, or L3-RSRP.

In some embodiments, determining the at least one qnew from the first candidate beam reference signal set and the second candidate beam reference signal set may include: in a case that a radio link quality corresponding to the second failure detection resource set is less than a first threshold Qout, and that at least one second candidate reference signal whose wireless link quality is greater than a second threshold Qin exists in the second candidate beam reference signal set, determining the at least one first candidate reference signal as the first qnew.

For example, when at least one reference signal whose radio link quality is less than the first threshold Qout exists in the second failure detection resource set, and at least one second candidate reference signal whose radio link quality is greater than the second threshold Qin exists in the second candidate beam reference signal set, then the at least one second candidate reference signal is determined to be the second qnew.

For another example, when a radio link quality of each reference signal in the second failure detection resource set is less than the first threshold Qout, and at least one second candidate reference signal whose radio link quality is greater than the second threshold Qin exists in the second candidate beam reference signal set, then the at least one second candidate reference signal is determined to be the second qnew.

The above-mentioned radio link quality of the reference signal in the second failure detection resource set may be at least one of L1-RSRP, L1-SINR, L3-RSRP, L3-RSRQ, L3-SINR, etc. The above-mentioned radio link quality of the reference signal in the second candidate beam reference signal set may be at least one of L1-RSRP, L1-SINR, L3-RSRP, L3-RSRQ, or L3-RSRP.

In the present disclosure, multiple ways to determine qnew are provided, so as to determine that the target channel and/or the target reference signal uses the beam corresponding to qnew for communication, thereby improving a success rate of TRP-based beam failure recovery.

In a communication method provided by the embodiments of the present disclosure, the target channel and/or the target reference signal may include at least one of: a PDCCH; a DMRS corresponding to the PDCCH; a PDSCH; a DMRS corresponding to the PDSCH; a PUSCH; a DMRS corresponding to the PUSCH; a PUCCH; a DMRS corresponding to the PUCCH; an SRS; or a CSI-RS.

In some embodiments, the target channel and/or the target reference signal may include a PDCCH.

In some embodiments, the target channel and/or the target reference signal may include a DMRS corresponding to the PDCCH.

In some embodiments, the target channel and/or the target reference signal may include a PDSCH.

In some embodiments, the target channel and/or the target reference signal may include a DMRS corresponding to the PDSCH.

In some embodiments, the target channel and/or the target reference signal may include a PUSCH.

In some embodiments, the target channel and/or the target reference signal may include a DMRS corresponding to the PUSCH.

In some embodiments, the target channel and/or the target reference signal may include a PUCCH.

In some embodiments, the target channel and/or the target reference signal may include a DMRS corresponding to the PUCCH.

In some embodiments, the target reference signal may include an SRS.

In some embodiments, the target reference signal may include a CSI-RS.

Of course, in some embodiments, the target channel and/or the target reference signal may also include any one or more channels, and/or one or more reference signals mentioned above. For example, the target channel and/or the target reference signal may include: a PDCCH, and a DMRS corresponding to the PDCCH; a PDCCH, a DMRS corresponding to the PDCCH, and a CSI-RS; a PDCCH, a DMRS corresponding to the PDCCH, a PUSCH, and a CSI-RS; a PDCCH, a DMRS corresponding to the PDCCH, a PDSCH, a DMRS corresponding to the PDSCH, and an SRS; a PDCCH, a DMRS corresponding to the PDCCH, a PDSCH, a DMRS corresponding to the PDSCH, an SRS and a CSI-RS; a PDCCH, a DMRS corresponding to the PDCCH, a PDSCH, a DMRS corresponding to the PDSCH, PUSCH, a DMRS corresponding to the PUSCH, and a CSI-RS; a PDCCH, a DMRS corresponding to the PDCCH, a PDSCH, a DMRS corresponding to the PDSCH, a PUSCH, a DMRS corresponding to the PUSCH, an SRS, and a CSI-RS; a PDCCH, a DMRS corresponding to the PDCCH, a PDSCH, a DMRS corresponding to the PDSCH, a PUSCH, a DMRS corresponding to the PUSCH, a PUCCH, a DMRS corresponding to the PUCCH, and a CSI-RS; a PDCCH, a DMRS corresponding to the PDCCH, a PDSCH, a DMRS corresponding to the PDSCH, a PUSCH, a DMRS corresponding to the PUSCH, a PUCCH, a DMRS corresponding to the PUCCH, an SRS, and a CSI-RS. It can be understood that the target channel and/or the target reference signal may also include any one or more of the channels, and/or one or more reference signals mentioned above, which are not listed here for the convenience of description.

The present disclosure is applicable to transmission of a variety of different channels and/or signals, and uses the beam corresponding to qnew for different target channels and/or target reference signals to perform communication, thereby improving a success rate of TRP-based beam failure recovery.

In a communication method provided in the embodiments of the present disclosure, determining that the target channel and/or the target reference signal uses the beam corresponding to qnew for communication includes at least one of: determining that a first PDCCH uses a beam corresponding to first qnew for communication, in which the target channel is the first PDCCH, a CORESET to which the first PDCCH belongs is configured to adopt the first unified TCI state, and the first qnew corresponds to the first unified TCI state; determining that a second PDCCH uses a beam corresponding to second qnew for communication, in which the target channel is the second PDCCH, a CORESET to which the second PDCCH belongs is configured to adopt the second unified TCI state, and the second qnew corresponds to the second unified TCI state; determining that a third PDCCH uses a beam corresponding to first qnew and/or a beam corresponding to second qnew for communication, in which the target channel is the third PDCCH, a CORESET to which the third PDCCH belongs is configured to adopt the first unified TCI state and the second unified TCI state, the first qnew corresponds to the first unified TCI state, and the second qnew corresponds to the second unified TCI state; determining that the target channel and/or the target reference signal uses a beam corresponding to first qnew for communication, in which the target channel and/or the target reference signal is scheduled by first downlink control information (DCI), the first DCI indicates that the target channel and/or the target reference signal adopts the first unified TCI state, and the first qnew corresponds to the first unified TCI state; determining that the target channel and/or the target reference signal uses a beam corresponding to second qnew for communication, in which the target channel and/or the target reference signal is scheduled by second DCI, the second DCI indicates that the target channel and/or the target reference signal adopts the second unified TCI state, and the second qnew corresponds to the second unified TCI state; or determining that the target channel and/or the target reference signal uses a beam corresponding to first qnew and/or a beam corresponding to second qnew for communication, in which the target channel and/or the target reference signal is scheduled by third DCI, the third DCI indicates that the target channel and/or the target reference signal adopts the first unified TCI state and the second unified TCI state, the first qnew corresponds to the first unified TCI state, and the second qnew corresponds to the second unified TCI state.

In some embodiments, it may be determined that the target channel and/or the target reference signal uses the beam corresponding to qnew for communication as follows. The target channel is a first PDCCH, and a CORESET to which the first PDCCH belongs is configured to adopt the first unified TCI state. It is determined that the first PDCCH uses the beam corresponding to the first qnew for communication. The first qnew corresponds to the first unified TCI state. It should be noted that determining that the first PDCCH uses the beam corresponding to the first qnew for communication can also be understood as determining that a DMRS corresponding to the first PDCCH uses the beam corresponding to the first qnew for communication.

**It** can be understood that in this embodiment, the PDCCH is configured to use the unified TCI state.

It can be understood that the first qnew is used as an update beam of the first unified TCI state. It can also be understood that a TCI state corresponding to the first qnew is used as the update beam of the first unified TCI state.

In some embodiments, it may be determined that the target channel and/or the target reference signal uses the beam corresponding to qnew for communication as follows. The target channel is a second PDCCH, and a CORESET to which the second PDCCH belongs is configured to adopt the second unified TCI state. It is determined that the second PDCCH uses the beam corresponding to the second qnew for communication. The second qnew corresponds to the second unified TCI state. It should be noted that determining that the second PDCCH uses the beam corresponding to the second qnew for communication can also be understood as determining that a DMRS corresponding to the second PDCCH uses the beam corresponding to the second qnew for communication.

It can be understood that in this embodiment, the PDCCH is configured to use the unified TCI state.

It can be understood that the second qnew is used as an update beam of the second unified TCI state. It can also be understood that a TCI state corresponding to the second qnew is used as the update beam of the second unified TCI state.

In some embodiments, it may be determined that the target channel and/or the target reference signal uses the beam corresponding to qnew for communication as follows. The target channel is a third PDCCH, and a CORESET to which the third PDCCH belongs is configured to adopt the first unified TCI state and the second unified TCI state. It is determined that the third PDCCH uses the beam corresponding to the first qnew and/or the beam corresponding to the second qnew for communication. The first qnew corresponds to the first unified TCI state. The second qnew corresponds to the second unified TCI state. It should be noted that determining that the third PDCCH uses the beam corresponding to the first qnew and/or the beam corresponding to the second qnew for communication can also be understood as determining that a DMRS corresponding to the second PDCCH uses the beam corresponding to the first qnew and/or the beam corresponding to the second qnew for communication.

It can be understood that in this embodiment, the PDCCH is configured to use the unified TCI state.

It can be understood that in this embodiment, if a beam failure is detected for only the first failure detection resource set, that is, a radio link quality of a reference signal in the first failure detection resource set is less than Qout, for this PDCCH, the terminal may use the first qnew and the second unified TCI state. This is because no beam failure occurs in the second failure detection resource set. Therefore, the second unified TCI state can continue to be used. Similarly, if a beam failure is detected for only the second failure detection resource set, the terminal may use the second qnew and the first unified TCI state. In some cases, only when the beam failure is detected for both the first failure detection resource set and the second failure detection resource set, the terminal may use the first qnew and the second qnew.

In some embodiments, it may be determined that the target channel and/or the target reference signal uses the beam corresponding to qnew for communication as follows. The target channel and/or the target reference signal is scheduled by first DCI, the first DCI indicates that the target channel and/or the target reference signal adopts the first unified TCI state, it is determined that the target channel and/or the target reference signal uses the beam corresponding to the first qnew for communication, and the first qnew corresponds to the first unified TCI state. In this case, the target channel and/or the target reference signal includes at least one of the following: a PDSCH and/or a DMRS corresponding to the PDSCH, a dynamic grant or configured grant type 2 PUSCH and/or a DMRS corresponding to the PUSCH, an aperiodic PUCCH and/or a DMRS corresponding to the PUCCH, an aperiodic CSI-RS, or an aperiodic SRS. The first DCI may, for example, include at least one of DCI format 0_1, DCI format 0_2, DCI format 1_1, or DCI format 1_2.

It can be understood that the first qnew is used to replace the first unified TCI state. That is, the first unified TCI state corresponds to the first failure detection resource set, and the first qnew is selected from the first candidate beam reference signal set, also the first candidate beam reference signal set is associated with the first failure detection resource set. Therefore, the first qnew is used to replace the first unified TCI state.

In some embodiments, it may be determined that the target channel and/or the target reference signal uses the beam corresponding to qnew for communication as follows. The target channel and/or the target reference signal is scheduled by second DCI, the second DCI indicates that the target channel and/or the target reference signal adopts the second unified TCI state, it is determined that the target channel and/or the target reference signal uses the beam corresponding to the second qnew for communication, and the second qnew corresponds to the second unified TCI state. In this case, the target channel and/or the target reference signal includes at least one of the following: a PDSCH and/or a DMRS corresponding to the PDSCH, a dynamic grant or configured grant type 2 PUSCH and/or a DMRS corresponding to the PUSCH, an aperiodic PUCCH and/or a DMRS corresponding to the PUCCH, an aperiodic CSI-RS, or an aperiodic SRS. The second DCI may, for example, include at least one of DCI format 0_1, DCI format 0_2, DCI format 1_1, or DCI format 1_2.

It can be understood that the second qnew is used to replace the second unified TCI state. That is, the second unified TCI state corresponds to the second failure detection resource set, and the second qnew is selected from the second candidate beam reference signal set, also the second candidate beam reference signal set is associated with the second failure detection resource set. Therefore, the second qnew is used to replace the second unified TCI state.

In some embodiments, it may be determined that the target channel and/or the target reference signal uses the beam corresponding to qnew for communication as follows. The target channel and/or the target reference signal is scheduled by third DCI, the third DCI indicates that the target channel and/or the target reference signal adopts the first unified TCI state and the second unified TCI state, it is determined that the target channel and/or the target reference signal uses the beam corresponding to the first qnew and/or the beam corresponding to the second qnew for communication, the first qnew corresponds to the first unified TCI state and the second qnew corresponds to the second unified TCI state. In this case, the target channel and/or the target reference signal includes at least one of the following: a PDSCH and/or a DMRS corresponding to the PDSCH, a dynamic grant or configured grant type 2 PUSCH and/or a DMRS corresponding to the PUSCH, an aperiodic PUCCH and/or a DMRS corresponding to the PUCCH, an aperiodic CSI-RS, or an aperiodic SRS. The third DCI may, for example, include at least one of DCI format 0_1, DCI format 0_2, DCI format 1_1, or DCI format 1_2.

It can be understood that in this embodiment, if a beam failure is detected for only the first failure detection resource set, that is, a radio link quality of a reference signal in the first failure detection resource set is less than Qout, for such target channel and/or target reference signal, the terminal may use the first qnew and the second unified TCI state. This is because no beam failure occurs in the second failure detection resource set. Therefore, the second unified TCI state can continue to be used. Similarly, if a beam failure is detected for only the second failure detection resource set, the terminal may use the second qnew and the first unified TCI state. In some cases, only when the beam failure is detected for both the first failure detection resource set and the second failure detection resource set, the terminal may use the first qnew and the second qnew.

The present disclosure provides a variety of situations where the target channels and/or target reference signals use corresponding qnew, thereby improving a success rate of TRP-based beam failure recovery.

In a communication method provided in the embodiments of the present disclosure, determining that the target channel and/or the target reference signal uses the beam corresponding to qnew for communication includes at least one of: receiving first RRC configuration information indicating that a first channel and/or a first reference signal uses a beam corresponding to first qnew for communication, in which the target channel and/or the target reference signal is the first channel and/or the first reference signal; receiving second RRC configuration information indicating that a second channel and/or a second reference signal uses a beam corresponding to second qnew for communication, in which the target channel and/or the target reference signal is the second channel and/or the second reference signal; or receiving third RRC configuration information indicating that a third channel and/or a third reference signal uses a beam corresponding to first qnew and/or a beam corresponding to second qnew for communication, in which the target channel and/or the target reference signal is the third channel and/or the third reference signal.

In some embodiments, it may be determined that the target channel and/or the target reference signal uses the beam corresponding to qnew for communication as follows. The target channel and/or the target reference signal is a first channel and/or a first reference signal, and first RRC configuration information is received. The first RRC configuration information indicates that the first channel and/or the first reference signal uses the beam corresponding to the first qnew for communication.

For example, the first RRC configuration information is used to configure that the first channel and/or the first reference signal corresponds to the first qnew. For example, one or more of the PDSCH, the PUSCH, the DMRS corresponding to the PDSCH, or the DMRS corresponding to the PUSCH scheduled by the DCI that does not contain a TCI selection field may be included. The DCI may be, for example, DCI format 0_0 or DCI format 1_0. For another example, one or more of the configured grant (CG) Type I PUSCH, the PUCCH, the DMRS corresponding to the PUSCH, the DMRS corresponding to the PUCCH, the CSI-RS, or the SRS that are not scheduled by the DCI may be included. For another example, one or more of the PDCCH or the DMRS corresponding to the PDCCH may be included. It can be understood that in this embodiment, the PDCCH is not configured to use the unified TCI state.

In some embodiments, it may be determined that the target channel and/or the target reference signal uses the beam corresponding to qnew for communication as follows. The target channel and/or the target reference signal is a second channel and/or a second reference signal, and second RRC configuration information is received. The second RRC configuration information indicates that the second channel and/or the second reference signal uses the beam corresponding to the second qnew for communication.

For example, the second RRC configuration information is used to configure that the second channel and/or the second reference signal corresponds to the second qnew. For example, one or more of the PDSCH, the PUSCH, the DMRS corresponding to the PDSCH, or the DMRS corresponding to the PUSCH scheduled by the DCI that does not contain a TCI selection field may be included. The DCI may be, for example, DCI format 0_0 or DCI format 1_0. For another example, one or more of the CG Type I PUSCH, the PUCCH, the DMRS corresponding to the PUSCH, the DMRS corresponding to the PUCCH, the CSI-RS, or the SRS that are not scheduled by the DCI may be included. For another example, one or more of the PDCCH or the DMRS corresponding to the PDCCH may be included. It can be understood that in this embodiment, the PDCCH is not configured to use the unified TCI state.

In some embodiments, it may be determined that the target channel and/or the target reference signal uses the beam corresponding to qnew for communication as follows. The target channel and/or the target reference signal is a third channel and/or a third reference signal, and third RRC configuration information is received. The third RRC configuration information indicates that the third channel and/or the third reference signal uses the beam corresponding to the first qnew and/or the beam corresponding to the second qnew for communication.

For example, the third RRC configuration information is used to configure that the third channel and/or the third reference signal corresponds to the first qnew and/or the second qnew. For example, one or more of the PDSCH, the PUSCH, the DMRS corresponding to the PDSCH, or the DMRS corresponding to the PUSCH scheduled by the DCI that does not contain a TCI selection field may be included. The DCI may be, for example, DCI format 0_0 or DCI format 1_0. For another example, one or more of the CG Type I PUSCH, the PUCCH, the DMRS corresponding to the PUSCH, the DMRS corresponding to the PUCCH, the CSI-RS, or the SRS not scheduled by the DCI may be included. For another example, one or more of the PDCCH or the DMRS corresponding to the PDCCH may be included. It can be understood that in this embodiment, the PDCCH is not configured to use the unified TCI state.

The present disclosure provides a variety of situations where target channels and/or target reference signals use corresponding qnew, thereby improving a success rate of TRP-based beam failure recovery.

In a communication method provided by the embodiments of the present disclosure, the method further includes: determining a path loss corresponding to transmission of the target channel and/or the target reference signal based on qnew. The target channel and/or the target reference signal includes at least one of the following: a PUCCH; a DMRS corresponding to the PUCCH; a PUSCH; a DMRS corresponding to the PUSCH; or an SRS.

In some embodiments, the terminal may determine the path loss corresponding to the transmission of the target channel and/or the target reference signal based on qnew.

For example, the terminal may determine qnew as a path loss reference signal for measuring the path loss.

In some embodiments, the target channel and/or the target reference signal may include a PUCCH.

In some embodiments, the target channel and/or the target reference signal may include a DMRS corresponding to the PUCCH.

In some embodiments, the target channel and/or the target reference signal may include a PUSCH.

In some embodiments, the target channel and/or the target reference signal may include a DMRS corresponding to the PUSCH.

In some embodiments, the target reference signal may include an SRS.

In some embodiments, the target channel and/or the target reference signal may also include any one or more channels, and/or one or more reference signals mentioned above. For example, the target channel and/or the target reference signal may include: a PUCCH, and a DMRS corresponding to the PUCCH; a PUSCH, a DMRS corresponding to the PUSCH, and an SRS; a PUCCH, a DMRS corresponding to the PUCCH, a PUSCH, and a DMRS corresponding to the PUSCH; a PUCCH, a DMRS corresponding to the PUCCH, a PUSCH, a DMRS corresponding to the PUSCH, and an SRS. It can be understood that the target channel and/or the target reference signal may also include any one or more of the channels, and/or one or more reference signals mentioned above, which are not listed here for the convenience of description.

In some embodiments, in a case that the target channel and/or the target reference signal is any one or more of the above channels, and/or any one or more of the above signals, the terminal may also determine the path loss corresponding to the transmission of the target channel and/or the target reference signal based on qnew.

For example, in a case that the target channel and/or the target reference signal is the PUCCH, the terminal may also determine the path loss corresponding to the transmission of the target channel and/or the target reference signal based on qnew. It can be understood that in this example, the PDCCH may be configured to use the unified TCI state.

For another example, in a case that the target channel and/or the target reference signal is the DMRS corresponding to the PUCCH, the terminal may also determine the path loss corresponding to the transmission of the target channel and/or the target reference signal based on qnew. It can be understood that in this example, the PDCCH may be configured to use the unified TCI state.

For another example, in a case that the target channel and/or the target reference signal is the PUSCH, the terminal may also determine the path loss corresponding to the transmission of the target channel and/or the target reference signal based on qnew.

For another example, in a case that the target channel and/or the target reference signal is the DMRS corresponding to the PUSCH, the terminal may also determine the path loss corresponding to the transmission of the target channel and/or the target reference signal based on qnew.

For another example, in a case that the target channel and/or the target reference signal is the SRS, the terminal may also determine the path loss corresponding to the transmission of the target channel and/or the target reference signal based on qnew.

In the present disclosure, the path loss may be determined based on qnew in various situations, which improves a success rate of TRP-based beam failure recovery when the target channel and/or the target reference signal uses the corresponding qnew.

In a communication method provided in the embodiments of the present disclosure, determining that the target channel and/or the target reference signal uses the beam corresponding to qnew for communication includes at least one of: receiving fourth RRC configuration information used to determine that the target channel and/or the target reference signal uses a beam corresponding to first qnew for communication, in which the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state; or receiving fifth RRC configuration information used to determine that the target channel and/or the target reference signal uses a beam corresponding to second qnew for communication, in which the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state.

In some embodiments, the target channel and/or the target reference signal is at least one of the PDCCH, the DMRS corresponding to the PDCCH, the CSI-RS, or the SRS, and the target channel and/or the target reference signal is not configured to use the first unified TCI state or the second unified TCI state. The network device may send fourth RRC configuration information. The fourth RRC configuration information is used to determine that the target channel and/or the target reference signal uses the beam corresponding to the first qnew for communication.

For example, at least one of the PDCCH, the DMRS corresponding to the PDCCH, the CSI-RS, or the SRS is not configured to use the first unified TCI state or the second unified TCI state, but uses a separately configured TCI state. In this case, the network device may send the fourth RRC configuration information. And the fourth RRC configuration information is used to determine that at least one of the PDCCH, the DMRS corresponding to the PDCCH, the CSI-RS, or the SRS uses the beam corresponding to the first qnew for communication.

In some embodiments, the target channel and/or the target reference signal is at least one of the PDCCH, the DMRS corresponding to the PDCCH, the CSI-RS, or the SRS, and the target channel and/or the target reference signal is not configured to use the first unified TCI state or the second unified TCI state. The network device may send fifth RRC configuration information. The fifth RRC configuration information is used to determine that the target channel and/or the target reference signal uses the beam corresponding to the second qnew for communication.

For example, at least one of the PDCCH, the DMRS corresponding to the PDCCH, the CSI-RS, or the SRS is not configured to use the first unified TCI state or the second unified TCI state, but uses a separately configured TCI state. In this case, the network device may send the fifth RRC configuration information. And the fifth RRC configuration information is used to determine that at least one of the PDCCH, the DMRS corresponding to the PDCCH, the CSI-RS, or the SRS uses the beam corresponding to the second qnew for communication.

The present disclosure may also be applied to channels and/or signals that are not configured with the unified TCI state, so that a success rate of TRP-based beam failure recovery is improved when the target channel and/or the target reference signal uses the corresponding qnew.

In a communication method provided in the embodiments of the present disclosure, the method further includes: receiving a scheduling request for beam failure recovery; and/or receiving a PUSCH, in which the PUSCH carries an UL MAC CE, and the UL MAC CE indicates the at least one new reference signal qnew and at least one of: an identifier of the first failure detection resource set; an identifier of the first candidate beam reference signal set; an identifier of the second failure detection resource set; or an identifier of the second candidate beam reference signal set.

In some embodiments, the network device may receive a scheduling request for beam failure recovery.

It can be understood that the scheduling request for beam failure recovery may be used to inform the network device that a beam failure occurs and to request beam failure recovery.

In some embodiments, the network device may receive a PUSCH. The PUSCH carries an UL MAC CE. The UL MAC CE may indicate qnew and an identifier of the first failure detection resource set.

**In** some embodiments, the network device may receive a PUSCH. The PUSCH carries an UL MAC CE. The UL MAC CE may indicate qnew and an identifier of the first candidate beam reference signal set.

In some embodiments, the network device may receive a PUSCH. The PUSCH carries an UL MAC CE. The UL MAC CE may indicate qnew and an identifier of the second failure detection resource set.

**In** some embodiments, the network device may receive a PUSCH. The PUSCH carries an UL MAC CE. The UL MAC CE may indicate qnew and an identifier of the second candidate beam reference signal set.

In some embodiments, the network device may receive a PUSCH. The PUSCH carries an UL MAC CE. The UL MAC CE may indicate qnew. Further, the UL MAC CE may indicate any one of more of an identifier of the first failure detection resource set, an identifier of the first candidate beam reference signal set, an identifier of the second failure detection resource set, or an identifier of the second candidate beam reference signal set.

In some embodiments, the identifier may be, for example, an identity (ID) or an index.

The terminal in the present disclosure may send information indicating qnew, so that other devices may, based on qnew, use the beam corresponding to qnew for communication in the target channel and/or the target reference signal, thereby improving a success rate of TRP-based beam failure recovery.

In a communication method provided in the embodiments of the present disclosure, the indication information may include a MAC CE. At least one unified TCI state indicated by the MAC CE corresponds to a code point in a TCI state indication field carried in the DCI.

In a communication method provided in the embodiments of the present disclosure, the indication information may include a MAC CE. The MAC CE may indicate at least one unified TCI state. The at least one unified TCI state indicated by the MAC CE may correspond to one code point in a TCI state indication field carried in the DCI.

The present disclosure provides a possible implementation of the indication information, thereby indicating at least one unified TCI state, so that when a corresponding beam failure detection resource set is transmitted, the corresponding unified TCI state is used for transmission, thereby improving a success rate of TRP-based beam failure recovery.

In a communication method provided in the embodiments of the present disclosure, the indication information may include a MAC CE and a DCI. The MAC CE indicates at least one unified TCI state corresponding to each of a plurality of code points corresponding to a TCI state indication field carried in the DCI, and the TCI state indication field carried in the DCI indicates one of the plurality of code points.

In some embodiments, the indication information may include a MAC CE. The MAC CE may indicate at least one unified TCI state corresponding to each of multiple code points. The multiple code points may be multiple code points that may exist in the TCI state indication field carried in the DCI. The TCI state indication field carried in the DCI may indicate one of the multiple code points, thus further indicates at least one unified TCI state corresponding to the code point.

The present disclosure provides a possible implementation of the indication information, thereby indicating at least one unified TCI state, so that when a corresponding beam failure detection resource set is transmitted, the corresponding unified TCI state is used for transmission, thereby improving a success rate of TRP-based beam failure recovery.

In a communication method provided in the embodiments of the present disclosure, at least one CORESET corresponding to the terminal is not configured with different CORESET pool indexes.

In some embodiments, at least one CORESET corresponding to the terminal may be a CORESET that is not configured with a CORESET pool index.

For example, all CORESETs corresponding to the terminal may be included, which may be CORESETs that are not configured with CORESET pool indexes.

Therefore, it can be understood that at least one CORESE corresponding to the terminal is not configured with different CORESET pool indexes, which may be a situation where the S-DCI is used to indicate the beam in the M-TRP.

The present disclosure is applicable to the situation where the M-TRP uses S-DCI to indicate the beam, so that in this situation, by determining qnew from a candidate beam reference signal set and determining that the target channel and/or the target reference signal uses the beam corresponding to qnew for communication, a success rate of TRP-based beam failure recovery is improved.

Next, the above-mentioned solution of the present disclosure will be described with more specific examples.

First, a terminal receives first configuration information, in which the first configuration information is used to configure a first candidate beam reference signal set and a second candidate beam reference signal set, and different CORESETs in at least one CORESET of the terminal are not configured with different CORESET pool indexes.

Second, the terminal receives indication information, and the indication information is used to determine multiple unified TCI states: a first unified TCI state and a second unified TCI state. The terminal determines a first beam failure detection resource set (including a reference signal corresponding to QCL Type D of the first unified TCI state) and a second beam failure detection resource set (including a reference signal corresponding to QCL Type D of the second unified TCI state) based on the multiple unified TCI states.
1. Unified TCI state includes at least one of a joint TCI state, a DL TCI state or an UL TCI state.

Third, when the terminal determines that a radio link quality of a reference signal in the first beam failure detection resource set is lower than Qout, and at least one candidate reference signal whose L1-RSRP is greater than Qin exists in the first candidate beam reference signal set, the at least one candidate reference signal is determined to be the first qnew.
1. The terminal sends a scheduling request for beam failure recovery and/or a PUSCH carrying an UL MAC CE. The UL MAC CE indicates at least one of an ID of the first beam failure detection resource set or an ID of the first candidate beam reference signal set, and the first qnew (if qnew is found). The base station side receives correspondingly.
2. The terminal and the base station synchronously determine two unified TCI states as the first qnew and the second unified TCI state, that is, update the first unified TCI state to the first qnew after the first time. In this case:
   - there is no impact on PDCCH, PDSCH, CSI-RS, PUCCH, PUSCH, and SRS that only use the second unified TCI state;
   - how to determine which TCI state each channel/signal uses, including
   - PDCCH, based on RRC signaling, each CORESET uses the first unified TCI state, the second unified TCI state, both the first unified TCI state and the second unified TCI state, or no unified TCI state (in this case, the MAC CE is used to indicate the TCI state corresponding to the CORESET)
   - PDSCH
   - for DCI format 1_1/1_2 scheduling, it can be determined based on an indication field in the DCI whether to use the first unified TCI state, the second unified TCI state, or both the first unified TCI state and the second unified TCI state;
   - for PDSCH scheduled by DCI that does not contain an indication field, or the interval between DCI and PDSCH is less than the threshold, based on a default rule or RRC configuration, it adopts the first unified TCI state, the second unified TCI state, or both the first unified TCI state and the second unified TCI state;
   - PUSCH
   - for PUSCH with CG Type 2 and dynamic grant, whether to use the first unified TCI state, the second unified TCI state, or both the first unified TCI state and the second unified TCI state is determined based on an SRS resource set indication field in DCI format 0_1/0_2;
   - for CG Type 1, whether to use the first unified TCI state, the second unified TCI state, or both the first unified TCI state and the second unified TCI state is determined based on an RRC configuration or default rule;
   - for PUSCH scheduled by DCI format 0_0, whether to use the first unified TCI state, the second unified TCI state, or both the first unified TCI state and the second unified TCI state is determined based on an RRC configuration or default rule;
   - PUCCH, based on an RRC configuration or default rule
   - the default rule includes:
   - using the first, or the second, or both;
   - using the TCI state corresponding to the scheduled PDCCH;
   - CSI-RS, based on an RRC configuration or default rule
   - SRS, based on an RRC configuration or default rule
   - for PDCCH, PDSCH, CSI-RS, PUCCH, PUSCH, and SRS that use only the first unified TCI state, or both the first unified TCI state and the second unified TCI state, the following updates are required:
   - for PDCCH, PDSCH, CSI-RS, PUCCH, PUSCH, and SRS that use only the first unified TCI state, the first qnew is used;
   - for PUCCH, PUSCH, and SRS, in addition to determining the QCL Type parameter in the TCI state based on the first qnew, it is also required to determine the path loss RS based on the first qnew;
   - for PDCCH, PDSCH, CSI-RS, PUCCH, PUSCH, and SRS that use both the first unified TCI state and the second unified TCI state, the first qnew and the second unified TCI state are used;
   - for CORESET, CSI-RS, and SRS that does not use the first unified TCI state and the second unified TCI state, but the TCI state they adopt is used to determine the first beam failure detection resource set (that is, the first beam failure detection resource set includes not only a reference signal corresponding to the QCL Type D of the first unified TCI state, but also a reference signal corresponding to the QCL Type D of the TCI state of the CORESET); or it is configured to be associated with the first beam failure detection resource set or the first candidate beam reference signal set;
   - the CORESET, CSI-RS, SRS use the first qnew.

Fourth, when the terminal determines that a radio link quality of a reference signal in the second beam failure detection resource set is lower than Qout, and at least one candidate reference signal whose L1-RSRP is greater than Qin exists in the second candidate beam reference signal set, the at least one candidate reference signal is determined to be the second qnew.
1. The two unified TCI states of the terminal are determined as the first unified TCI state and the second qnew, as described above.

Fifth, when the terminal determines that a radio link quality of a reference signal in the first beam failure detection resource set and a radio link quality of a reference signal in the second beam failure detection resource set are lower than Qout, and at least one candidate reference signal whose L1-RSRP is greater than Qin exists in the first candidate beam reference signal set and the second candidate beam reference signal set, the at least one candidate reference signal is determined to be the first qnew and the second qnew.
1. The two unified TCI states of the terminal are determined as the first qnew and the second qnew, as described above.

Sixth, there are two ways to indicate the two unified TCI states.
1. MAC-CE is used to indicate at least one TCI state, and the at least one TCI state corresponds to a code point in the TCI state indication field carried in the DCI.
2. Or MAC-CE is used to indicate at least one TCI state corresponding to multiple code points in the TCI state indication field carried in the DCI, and the TCI state indication field carried in the DCI is used to indicate one code point of the multiple code points.

It should be noted that those skilled in the art can understand that the various implementation methods/embodiments involved in the embodiments of the present disclosure can be used in conjunction with the aforementioned embodiments or can be used independently. Whether used alone or in conjunction with the aforementioned embodiments, the implementation principle is similar. In the implementation of the present disclosure, some embodiments are described in terms of implementation methods used together. Of course, those skilled in the art can understand that such examples are not limitations of the embodiments of the present disclosure.

Based on the same concept, the embodiments of the present disclosure also provide a communication apparatus and device.

It may be understood that the communication apparatus and device provided by the embodiments of the present disclosure include corresponding hardware structures and/or software modules for executing each function in order to realize the above functions. In combination with the units and algorithm steps of each example disclosed in the embodiments of the present disclosure, the embodiments of the present disclosure may be implemented in the form of hardware or a combination of hardware and computer software. Whether a function is executed in the form of hardware or computer software driving hardware depends on the specific application and design constraints of the technical solution. Those skilled in the art can use different methods to implement the described functions for each specific application, but such implementation should not be considered to exceed the scope of the technical solution of the embodiments of the present disclosure.

FIG. 7 is a block diagram indicating a communication apparatus according to an embodiment of the present disclosure. As shown in FIG. 7, the apparatus 200 includes a processing module 201 and a communication module 202. The processing module 201 is configured to determine at least one new reference signal qnew from a first candidate beam reference signal set and/or a second candidate beam reference signal set. The communication module 202 is configured to determine, according to a signaling indication or a preset rule, that a target channel and/or a target reference signal uses a beam corresponding to the at least one new reference signal qnew for communication.

In some implementations, the communication module 202 is further configured to receive first configuration information, in which the first configuration information is used to configure the first candidate beam reference signal set and the second candidate beam reference signal set, the first candidate beam reference signal set corresponds to a first failure detection resource set, and the second candidate beam reference signal set corresponds to a second failure detection resource set.

In some implementations, the communication module 202 is further configured to receive indication information, in which the indication information is used to determine a first unified transmission configuration indication (TCI) state and a second unified TCI state.

In some implementations, the first unified TCI state or the second unified TCI state includes at least one of: a joint TCI state; a DL TCI state; or an UL TCI state.

In some implementations, the first failure detection resource set and the second failure detection resource set are determined based on at least one of: the communication module 202 being further configured to receive second configuration information, in which the second configuration information indicates the first failure detection resource set and the second failure detection resource set; determine the first failure detection resource set and the second failure detection resource set based on an association relationship between a control resource set (CORESET) and the first failure detection resource set and/or the second failure detection resource set, in which the first failure detection resource set includes a reference signal resource corresponding to a TCI state of the CORESET associated with the first failure detection resource set, and the second failure detection resource set includes a reference signal resource corresponding to a TCI state of the CORESET associated with the second failure detection resource set; determine the first failure detection resource set and the second failure detection resource set based on an association relationship between a CORESET and the first candidate beam reference signal set and/or the second candidate beam reference signal set, in which the first failure detection resource set includes a reference signal resource corresponding to a TCI state of the CORESET associated with the first candidate beam reference signal set, and the second failure detection resource set includes a reference signal resource corresponding to a TCI state of the CORESET associated with the second candidate beam reference signal set; or determine the first failure detection resource set and the second failure detection resource set based on the first unified TCI state and the second unified TCI state, in which the first failure detection resource set includes a reference signal resource corresponding to the first unified TCI state, and the second failure detection resource set includes a reference signal resource corresponding to the second unified TCI state.

In some implementations, the communication module 202 is further configured to receive third configuration information, in which the third configuration information indicates the association relationship between the CORESET and the first failure detection resource set and/or the second failure detection resource set; or determine, based on a first predefined rule, the association relationship between the CORESET and the first failure detection resource set and/or the second failure detection resource set.

In some implementations, the communication module 202 is further configured to receive fourth configuration information, in which the fourth configuration information indicates the association relationship between the CORESET and the first candidate beam reference signal set and/or the second candidate beam reference signal set; or determine, based on a first predefined rule, the association relationship between the CORESET and the first candidate beam reference signal set and/or the second candidate beam reference signal set.

In some implementations, the at least one new reference signal qnew includes a first new reference signal and/or a second new reference signal; determining the at least one new reference signal qnew from the first candidate beam reference signal set and/or the second candidate beam reference signal set includes at least one of: in a case that a radio link quality corresponding to the first failure detection resource set is less than a first threshold Qout, and that at least one first candidate reference signal whose radio link quality is greater than a second threshold Qin exists in the first candidate beam reference signal set, determining the at least one first candidate reference signal as the first new reference signal; or in a case that a radio link quality corresponding to the second failure detection resource set is less than a first threshold Qout, and that at least one second candidate reference signal whose radio link quality is greater than a second threshold Qin exists in the second candidate beam reference signal set, determining the at least one second candidate reference signal as the second new reference signal.

In some implementations, the target channel and/or the target reference signal includes at least one of: a physical downlink control channel (PDCCH); a physical downlink shared channel (PDSCH); a physical uplink shared channel (PUSCH); a physical uplink control channel (PUCCH); a demodulation reference signal (DMRS) corresponding to the PDCCH; a DMRS corresponding to the PDSCH; a DMRS corresponding to the PUCCH; a DMRS corresponding to the PUSCH; a sounding reference signal (SRS); or a channel state information-reference signal (CSI-RS).

In some implementations, determining, according to the signaling indication or the preset rule, that the target channel and/or the target reference signal uses the beam corresponding to the at least one new reference signal qnew for communication includes at least one of: determining that a first PDCCH uses a beam corresponding to the first new reference signal for communication, in which the target channel is the first PDCCH, a CORESET to which the first PDCCH belongs is configured to adopt the first unified TCI state, and the first new reference signal corresponds to the first unified TCI state; determining that a second PDCCH uses a beam corresponding to the second new reference signal for communication, in which the target channel is the second PDCCH, a CORESET to which the second PDCCH belongs is configured to adopt the second unified TCI state, and the second new reference signal corresponds to the second unified TCI state; determining that a third PDCCH uses a beam corresponding to the first new reference signal and/or a beam corresponding to the second new reference signal for communication, in which the target channel is the third PDCCH, a CORESET to which the third PDCCH belongs is configured to adopt the first unified TCI state and the second unified TCI state, the first new reference signal corresponds to the first unified TCI state, and the second new reference signal corresponds to the second unified TCI state; determining that the target channel and/or the target reference signal uses a beam corresponding to the first new reference signal for communication, in which the target channel and/or the target reference signal is scheduled by first downlink control information (DCI), the first DCI indicates that the target channel and/or the target reference signal adopts the first unified TCI state, and the first new reference signal corresponds to the first unified TCI state; determining that the target channel and/or the target reference signal uses a beam corresponding to the second new reference signal for communication, in which the target channel and/or the target reference signal is scheduled by second DCI, the second DCI indicates that the target channel and/or the target reference signal adopts the second unified TCI state, and the second new reference signal corresponds to the second unified TCI state; or determining that the target channel and/or the target reference signal uses a beam corresponding to the first new reference signal and/or a beam corresponding to the second new reference signal for communication, in which the target channel and/or the target reference signal is scheduled by third DCI, the third DCI indicates that the target channel and/or the target reference signal adopts the first unified TCI state and the second unified TCI state, the first new reference signal corresponds to the first unified TCI state, and the second new reference signal corresponds to the second unified TCI state.

In some implementations, determining, according to the signaling indication or the preset rule, that the target channel and/or the target reference signal uses the beam corresponding to the at least one new reference signal qnew for communication includes at least one of: receiving first radio resource control (RRC) configuration information indicating that a first channel and/or a first reference signal uses a beam corresponding to the first new reference signal for communication, in which the target channel and/or the target reference signal is the first channel and/or the first reference signal; receiving second RRC configuration information indicating that a second channel and/or a second reference signal uses a beam corresponding to the second new reference signal for communication, in which the target channel and/or the target reference signal is the second channel and/or the second reference signal; or receiving third RRC configuration information indicating that a third channel and/or a third reference signal uses a beam corresponding to the first new reference signal and/or a beam corresponding to the second new reference signal for communication, in which the target channel and/or the target reference signal is the third channel and/or the third reference signal.

In some implementations, the processing module 201 is further configured to determine, based on the at least one new reference signal qnew, a path loss corresponding to a transmission of the target channel and/or the target reference signal; in which the target channel and/or the target reference signal includes at least one of: a PUCCH; a DMRS corresponding to the PUCCH; a PUSCH; a DMRS corresponding to the PUSCH; or an SRS.

In some implementations, determining, according to the signaling indication or the preset rule, that the target channel and/or the target reference signal uses the beam corresponding to the at least one new reference signal qnew for communication includes at least one of: receiving fourth RRC configuration information used to determine that the target channel and/or the target reference signal uses a beam corresponding to the first new reference signal for communication, in which the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state; or receiving fifth RRC configuration information used to determine that the target channel and/or the target reference signal uses a beam corresponding to the second new reference signal for communication, in which the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state.

In some implementations, the communication module 202 is further configured to send a scheduling request for beam failure recovery; and/or send a PUSCH, in which the PUSCH carries an uplink media access control control element (UL MAC CE), and the UL MAC CE indicates the at least one new reference signal qnew and at least one of: an identifier of the first failure detection resource set; an identifier of the first candidate beam reference signal set; an identifier of the second failure detection resource set; or an identifier of the second candidate beam reference signal set.

In some implementations, the indication information includes a MAC CE, and at least one unified TCI state indicated by the MAC CE corresponds to a code point in a TCI state indication field carried in a DCI.

In some implementations, the indication information includes a MAC CE and a DCI, the MAC CE indicates at least one unified TCI state corresponding to each of a plurality of code points corresponding to a TCI state indication field carried in the DCI, and the TCI state indication field carried in the DCI indicates one of the plurality of code points.

In some implementations, at least one CORESET corresponding to the terminal is not configured with different CORESET pool indexes.

FIG. 8 is a block diagram indicating a communication apparatus according to an embodiment of the present disclosure. As shown in FIG. 8, the apparatus 300 includes a communication module 301. The communication module 301 is configured to: send first configuration information, in which the first configuration information is used to instruct a terminal to configure a first candidate beam reference signal set and/or a second candidate beam reference signal set; receive information indicating a new reference signal qnew, in which the new reference signal qnew is determined by the terminal from the first candidate beam reference signal set and/or the second candidate beam reference signal set; and determine that a target channel and/or a target reference signal uses a beam corresponding to the at least one new reference signal qnew for communication.

In some implementations, the first candidate beam reference signal set corresponds to a first failure detection resource set, and the second candidate beam reference signal set corresponds to a second failure detection resource set.

In some implementations, the communication module 301 is further configured to: send indication information, in which the indication information is used to determine a first unified transmission configuration indication (TCI) state and a second unified TCI state.

In some implementations, the first unified TCI state or the second unified TCI state includes at least one of: a joint TCI state; a downlink (DL) TCI state; or an uplink (UL) TCI state.

In some implementations, the first failure detection resource set and the second failure detection resource set are determined based on at least one of: the processing module 302 being configured to: configure the first failure detection resource set and the second failure detection resource set, and send second configuration information, in which the second configuration information indicates the first failure detection resource set and the second failure detection resource set; determine the first failure detection resource set and the second failure detection resource set based on an association relationship between a control resource set (CORESET) and the first failure detection resource set and/or the second failure detection resource set, in which the first failure detection resource set includes a reference signal resource corresponding to a TCI state of the CORESET associated with the first failure detection resource set, and the second failure detection resource set includes a reference signal resource corresponding to a TCI state of the CORESET associated with the second failure detection resource set; determine the first failure detection resource set and the second failure detection resource set based on an association relationship between a CORESET and the first candidate beam reference signal set and/or the second candidate beam reference signal set, in which the first failure detection resource set includes a reference signal resource corresponding to a TCI state of the CORESET associated with the first candidate beam reference signal set, and the second failure detection resource set includes a reference signal resource corresponding to a TCI state of the CORESET associated with the second candidate beam reference signal set; or determine the first failure detection resource set and the second failure detection resource set based on the first unified TCI state and the second unified TCI state, in which the first failure detection resource set includes a reference signal resource corresponding to the first unified TCI state, and the second failure detection resource set includes a reference signal resource corresponding to the second unified TCI state.

In some implementations, the communication module 301 is further configured to: send third configuration information, in which the third configuration information indicates the association relationship between the CORESET and the first failure detection resource set and/or the second failure detection resource set.

In some implementations, the communication module 301 is further configured to: send fourth configuration information, in which the fourth configuration information indicates the association relationship between the CORESET and the first candidate beam reference signal set and/or the second candidate beam reference signal set.

In some implementations, the at least one new reference signal qnew includes a first new reference signal and/or a second new reference signal; the at least one new reference signal qnew is determined in at least one of following ways: determining at least one first candidate reference signal as the first new reference signal in a case that a radio link quality corresponding to the first failure detection resource set is less than a first threshold Qout, and the first candidate beam reference signal set has the at least one first candidate reference signal whose radio link quality is greater than a second threshold Qin; or determining at least one second candidate reference signal as the second new reference signal in a case that a radio link quality corresponding to the second failure detection resource set is less than a first threshold Qout, and the second candidate beam reference signal set has the at least one second candidate reference signal whose radio link quality is greater than a second threshold Qin.

In some implementations, the target channel and/or the target reference signal includes at least one of: a physical downlink control channel (PDCCH); a demodulation reference signal (DMRS) corresponding to the PDCCH; a physical downlink shared channel (PDSCH); a DMRS corresponding to the PDSCH; a physical uplink shared channel (PUSCH); a DMRS corresponding to the PUSCH; a physical uplink control channel (PUCCH); a DMRS corresponding to the PUCCH; a sounding reference signal (SRS); or a channel state information-reference signal (CSI-RS).

In some implementations, determining that the target channel and/or the target reference signal uses the beam corresponding to the at least one new reference signal qnew for communication includes at least one of: determining that a first PDCCH uses a beam corresponding to the first new reference signal for communication, in which the target channel is the first PDCCH, a CORESET to which the first PDCCH belongs is configured to adopt the first unified TCI state, and the first new reference signal corresponds to the first unified TCI state; determining that a second PDCCH uses a beam corresponding to the second new reference signal for communication, in which the target channel is the second PDCCH, a CORESET to which the second PDCCH belongs is configured to adopt the second unified TCI state, and the second new reference signal corresponds to the second unified TCI state; determining that a third PDCCH uses a beam corresponding to the first new reference signal and/or a beam corresponding to the second new reference signal for communication, in which the target channel is the third PDCCH, a CORESET to which the third PDCCH belongs is configured to adopt the first unified TCI state and the second unified TCI state, the first new reference signal corresponds to the first unified TCI state, and the second new reference signal corresponds to the second unified TCI state; determining that the target channel and/or the target reference signal uses a beam corresponding to the first new reference signal for communication, in which the target channel and/or the target reference signal is scheduled by first downlink control information (DCI), the first DCI indicates that the target channel and/or the target reference signal adopts the first unified TCI state, and the first new reference signal corresponds to the first unified TCI state; determining that the target channel and/or the target reference signal uses a beam corresponding to the second new reference signal for communication, in which the target channel and/or the target reference signal is scheduled by second downlink control information (DCI), the second DCI indicates that the target channel and/or the target reference signal adopts the second unified TCI state, and the second new reference signal corresponds to the second unified TCI state; or determining that the target channel and/or the target reference signal uses a beam corresponding to the first new reference signal and/or a beam corresponding to the second new reference signal for communication, in which the target channel and/or the target reference signal is scheduled by third downlink control information (DCI), the third DCI indicates that the target channel and/or the target reference signal adopts the first unified TCI state and the second unified TCI state, the first new reference signal corresponds to the first unified TCI state, and the second new reference signal corresponds to the second unified TCI state.

In some implementations, determining that the target channel and/or the target reference signal uses the beam corresponding to the at least one new reference signal qnew for communication includes at least one of: sending first radio resource control (RRC) configuration information indicating that a first channel and/or a first reference signal uses a beam corresponding to the first new reference signal for communication, in which the target channel and/or the target reference signal is the first channel and/or the first reference signal, and the first channel and/or the first reference signal uses the beam corresponding to the first new reference signal for communication; sending second RRC configuration information indicating that a second channel and/or a second reference signal uses a beam corresponding to the second new reference signal for communication, in which the target channel and/or the target reference signal is the second channel and/or the second reference signal, and the second channel and/or the second reference signal uses the beam corresponding to the second new reference signal for communication; or sending third RRC configuration information indicating that a third channel and/or a third reference signal uses a beam corresponding to the first new reference signal and/or a beam corresponding to the second new reference signal for communication, in which the target channel and/or the target reference signal is the third channel and/or the third reference signal, and the third channel and/or the third reference signal uses the beam corresponding to the first new reference signal and/or the beam corresponding to the second new reference signal for communication.

**In** some implementations, the processing module 302 is further configured to: determine, based on the at least one new reference signal qnew, a path loss corresponding to a transmission of the target channel and/or the target reference signal; in which the target channel and/or the target reference signal includes at least one of: a PUCCH; a DMRS corresponding to the PUCCH; a PUSCH; a DMRS corresponding to the PUSCH; or an SRS.

In some implementations, determining that the target channel and/or the target reference signal uses the beam corresponding to the at least one new reference signal qnew for communication includes at least one of: determining that the target channel and/or the target reference signal uses a beam corresponding to the first new reference signal for communication, and sending fourth RRC configuration information used to determine that the target channel and/or the target reference signal uses the beam corresponding to the first new reference signal for communication, in which the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state; or determining that the target channel and/or the target reference signal uses a beam corresponding to the second new reference signal for communication, and sending fifth RRC configuration information used to determine that the target channel and/or the target reference signal uses the beam corresponding to the second new reference signal for communication, in which the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state.

In some implementations, the communication module 301 is further configured to: receive a scheduling request for beam failure recovery; and/or receive a PUSCH, in which the PUSCH carries an uplink media access control control element (UL MAC CE), and the UL MAC CE indicates the at least one new reference signal qnew and at least one of: an identifier of the first failure detection resource set; an identifier of the first candidate beam reference signal set; an identifier of the second failure detection resource set; or an identifier of the second candidate beam reference signal set.

In some implementations, the indication information includes a MAC CE, and at least one unified TCI state indicated by the MAC CE corresponds to a code point in a TCI state indication field carried in a DCI.

In some implementations, the indication information includes a MAC CE and a DCI, the MAC CE indicates at least one unified TCI state corresponding to each of a plurality of code points corresponding to a TCI state indication field carried in the DCI, and the TCI state indication field carried in the DCI indicates one of the plurality of code points.

In some implementations, at least one CORESET corresponding to the terminal is not configured with different CORESET pool indexes.

Regarding the apparatus in the above embodiments, the specific manner in which each module performs operations has been described in detail in the embodiments of the method, and will not be elaborated here.

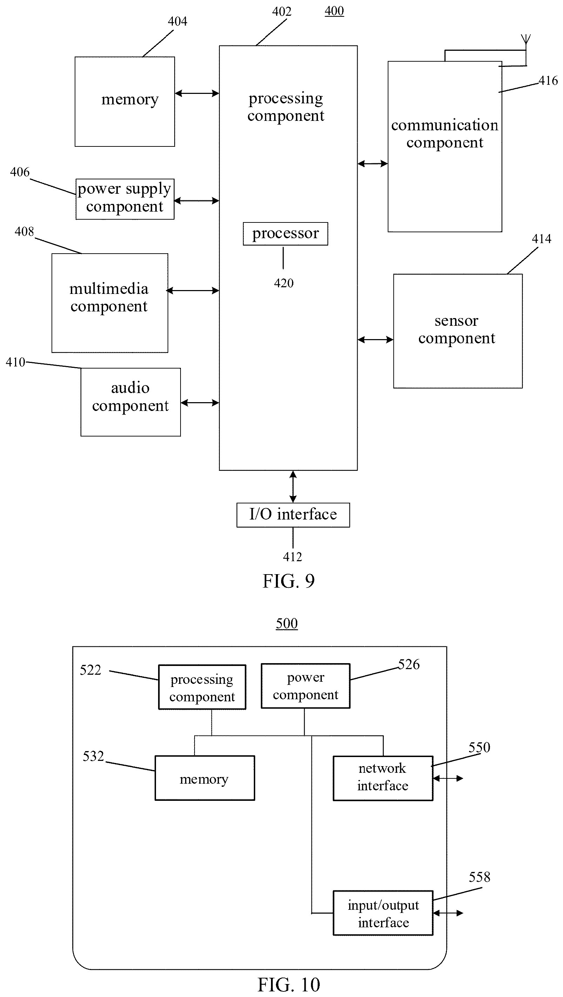

FIG. 9 is a schematic block diagram of a communication apparatus according to an embodiment of the present disclosure. For example, the device 400 may be a mobile phone, a computer, a digital broadcasting terminal, a message transceiver device, a gaming console, a tablet device, a medical device, a fitness device, a personal digital assistant, etc.

Referring to FIG. 9, the device 400 may include one or more of the following components: a processing component 402, a memory 404, a power supply component 406, a multimedia component 408, an audio component 410, an input/output (I/O) interface 412, a sensor component 414, and a communication component 416.

The processing component 402 generally controls the overall operations of the device 400, such as operations associated with displays, telephone calls, data communications, camera operations, and recording operations. The processing component 402 may include one or more processors 420 to execute instructions to accomplish all or some of the steps of the method described above. Alternatively, the processing component 402 may include one or more modules to facilitate interactions between the processing component 402 and other components. For example, the processing component 402 may include a multimedia module to facilitate interactions between the multimedia component 408 and the processing component 402.

The memory 404 is configured to store various types of data to support operation at the device 400. Examples of such data include instructions for any application or method operated on the device 400, contact data, phone book data, messages, pictures, videos, etc. The memory 404 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 406 provides power to the various components of the device 400. The power supply component 406 may include a power management system, one or more power supplies, and other components associated with generating, managing, and distributing power for the device 400.

The multimedia component 408 includes a screen providing an output interface between the device 400 and a user. In some embodiments, the screen may include a liquid crystal display (LCD) and a touch panel (TP). In the case that the screen includes a touch panel, the screen may be implemented as a touch screen to receive input signals from the user. If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the device 400 is in an operating mode, such as a shooting mode or a video mode, the front camera and/or the rear camera may receive external multimedia data. Each front camera and rear camera may be a fixed optical lens system or have a focal length and optical zoom capability.

The audio component 410 is configured to output and/or input audio signals. For example, the audio component 410 includes a microphone (MIC) that is configured to receive external audio signals when the device 400 is in an operating mode, such as a call mode, a recording mode, and a voice recognition mode. The received audio signals may be further stored in the memory 404 or sent in the communication component 416. In some embodiments, the audio component 410 further includes a speaker for outputting audio signals.

The I/ O interface 412 provides an interface between the processing component 402 and a peripheral interface module, said peripheral interface module may be a keypad, a click wheel, buttons, etc. These buttons may include, but are not limited to: a home button, a volume button, a start button, and a lock button.

The sensor component 414 includes one or more sensors for providing various aspects of status assessment for the device 400. For example, the sensor component 414 can detect the open/closed state of the device 400, the relative positioning of components, such as the display and keypad of the device 400, and the sensor component 414 can also detect the position change of the device 400 or a component of the device 400, the presence or absence of contact between the user and the device 400, the orientation or acceleration/deceleration of the device 400, and the temperature change of the device 400. The sensor component 414 may include a proximity sensor configured to detect the presence of nearby objects without any physical contact. The sensor component 414 may also include an optical sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate communication between the device 400 and other devices by wired or wireless means. The device 400 may access a wireless network based on a communication standard, such as Wi-Fi, 2G or 3G, or their combination. In an exemplary embodiment, the communication component 816 receives broadcast signals or broadcast-related information from an external broadcast management system in a broadcast channel. In an exemplary embodiment, the communication component 416 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the device 400 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In example embodiments, there is also provided a non-transitory computer-readable storage medium including instructions, such as a memory 404 including instructions, the instructions being executable by a processor 420 of the device 400for accomplishing the above-described method. For example, the non-transitory computer-readable storage medium may be a ROM, a random access memory (RAM), a CD-ROM, a magnetic tape, floppy disks, and optical data storage devices, etc.

**As** shown in FIG. 10, an embodiment of the present disclosure shows a communication apparatus. For example, the device 500 may be provided as a base station, or a server. Referring to FIG. 10, the device 500 includes a processing component 522, which further includes one or more processors, and a memory resource represented by a memory 532 for storing instructions executable by the processing component 522, such as an application. The application stored in the memory 532 may include one or more modules, each corresponding to a set of instructions. In addition, the processing component 522 is configured to execute instructions to execute any method of the aforementioned method.

The device 500 may also include a power supply component 526 configured to perform power management of the device 500, a wired or wireless network interface 550 configured to connect the device 500 to a network, and an input/output (I/O) interface 558. The device 500 may operate based on an operating system stored in the memory 532, such as Windows Server TM, Mac OS X TM, Unix TM, Linux TM, FreeBSD TM or the like.

The present disclosure proposes that in the case of S-DCI MTRP, after at least one qnew is determined from a plurality of candidate beam reference signal sets, a method for determining which channels/signals should use the qnew is provided.

The present disclosure proposes that when the terminal is configured with S-DCI MTRP, when at least one qnew is determined based on multiple candidate beam reference signal sets, a method for determining which channels/signals use the qnew is provided to improve a success rate of TRP-based beam failure recovery.

It is further understood that in the present disclosure, "plurality" refers to two or more than two, and other quantifiers are similar thereto. "And/or" describes the association relationship of associated objects, indicating that three relationships may exist. For example, A and/or B may represent: A exists alone, A and B exist at the same time, and B exists alone. The character "/" generally indicates that the associated objects before and after are in an "or" relationship. The singular forms "a", "the" and "said" are also intended to include plural forms, unless the context clearly indicates other meanings.

It is further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It is further understood that the meanings of the words "in response to" and "if" involved in the present disclosure depend on the context and the actual usage scenario. For example, the word "in response to" used herein can be interpreted as "at..." or "when..." or "if" or "in case of'.

It is further understood that, although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein.

It should be understood that the disclosure is not limited to the precise structures described above and illustrated in the accompanying drawings, and that various modifications and changes may be made without departing from its scope. The scope of the disclosure is limited only by the appended claims.

## Claims

1. A communication method, performed by a terminal, comprising:
determining at least one new reference signal qnew from a first candidate beam reference signal set and/or a second candidate beam reference signal set; and
determining, according to a signaling indication or a preset rule, that a target channel and/or a target reference signal uses a beam corresponding to the at least one new reference signal qnew for communication.

2. The method of claim 1, further comprising:
receiving first configuration information, wherein the first configuration information is used to configure the first candidate beam reference signal set and the second candidate beam reference signal set;
wherein, the first candidate beam reference signal set corresponds to a first failure detection resource set, and the second candidate beam reference signal set corresponds to a second failure detection resource set.

3. The method of claim 2, further comprising:
receiving indication information, wherein the indication information is used to determine a first unified transmission configuration indication (TCI) state and a second unified TCI state.

4. The method of claim 3, wherein the first unified TCI state or the second unified TCI state comprises at least one of:
a joint TCI state;
a downlink (DL) TCI state; or
an uplink (UL) TCI state.

5. The method of claim 3 or 4, wherein the first failure detection resource set and the second failure detection resource set are determined based on at least one of:
receiving second configuration information, wherein the second configuration information indicates the first failure detection resource set and the second failure detection resource set;
determining the first failure detection resource set and the second failure detection resource set based on an association relationship between a control resource set (CORESET) and the first failure detection resource set and/or the second failure detection resource set, wherein the first failure detection resource set comprises a reference signal resource corresponding to a TCI state of the CORESET associated with the first failure detection resource set, and the second failure detection resource set comprises a reference signal resource corresponding to a TCI state of the CORESET associated with the second failure detection resource set;
determining the first failure detection resource set and the second failure detection resource set based on an association relationship between a CORESET and the first candidate beam reference signal set and/or the second candidate beam reference signal set, wherein the first failure detection resource set comprises a reference signal resource corresponding to a TCI state of the CORESET associated with the first candidate beam reference signal set, and the second failure detection resource set comprises a reference signal resource corresponding to a TCI state of the CORESET associated with the second candidate beam reference signal set; or
determining the first failure detection resource set and the second failure detection resource set based on the first unified TCI state and the second unified TCI state, wherein the first failure detection resource set comprises a reference signal resource corresponding to the first unified TCI state, and the second failure detection resource set comprises a reference signal resource corresponding to the second unified TCI state.

6. The method of claim 5, wherein the first failure detection resource set and the second failure detection resource set are determined based on the association relationship between the CORESET and the first failure detection resource set and/or the second failure detection resource set, the method further comprises:
receiving third configuration information, wherein the third configuration information indicates the association relationship between the CORESET and the first failure detection resource set and/or the second failure detection resource set; or
determining, based on a first predefined rule, the association relationship between the CORESET and the first failure detection resource set and/or the second failure detection resource set.

7. The method of claim 5, wherein the first failure detection resource set and the second failure detection resource set are determined based on the association relationship between the CORESET and the first candidate beam reference signal set and/or the second candidate beam reference signal set, the method further comprises:
receiving fourth configuration information, wherein the fourth configuration information indicates the association relationship between the CORESET and the first candidate beam reference signal set and/or the second candidate beam reference signal set; or
determining, based on a first predefined rule, the association relationship between the CORESET and the first candidate beam reference signal set and/or the second candidate beam reference signal set.

8. The method of claim 5, wherein the at least one new reference signal qnew comprises a first new reference signal and/or a second new reference signal;
determining the at least one new reference signal qnew from the first candidate beam reference signal set and/or the second candidate beam reference signal set comprises at least one of:
in a case that a radio link quality corresponding to the first failure detection resource set is less than a first threshold Qout, and that at least one first candidate reference signal whose radio link quality is greater than a second threshold Qin exists in the first candidate beam reference signal set, determining the at least one first candidate reference signal as the first new reference signal; or
in a case that a radio link quality corresponding to the second failure detection resource set is less than a first threshold Qout, and that at least one second candidate reference signal whose radio link quality is greater than a second threshold Qin exists in the second candidate beam reference signal set, determining the at least one second candidate reference signal as the second new reference signal.

9. The method of claim 8, wherein the target channel and/or the target reference signal comprises at least one of:
a physical downlink control channel (PDCCH);
a physical downlink shared channel (PDSCH);
a physical uplink shared channel (PUSCH);
a physical uplink control channel (PUCCH);
a demodulation reference signal (DMRS) corresponding to the PDCCH;
a DMRS corresponding to the PDSCH;
a DMRS corresponding to the PUCCH;
a DMRS corresponding to the PUSCH;
a sounding reference signal (SRS); or
a channel state information-reference signal (CSI-RS).

10. The method of claim 9, wherein determining, according to the signaling indication or the preset rule, that the target channel and/or the target reference signal uses the beam corresponding to the at least one new reference signal qnew for communication comprises at least one of:
determining that a first PDCCH uses a beam corresponding to the first new reference signal for communication, wherein the target channel is the first PDCCH, a CORESET to which the first PDCCH belongs is configured to adopt the first unified TCI state, and the first new reference signal corresponds to the first unified TCI state;
determining that a second PDCCH uses a beam corresponding to the second new reference signal for communication, wherein the target channel is the second PDCCH, a CORESET to which the second PDCCH belongs is configured to adopt the second unified TCI state, and the second new reference signal corresponds to the second unified TCI state;
determining that a third PDCCH uses a beam corresponding to the first new reference signal and/or a beam corresponding to the second new reference signal for communication, wherein the target channel is the third PDCCH, a CORESET to which the third PDCCH belongs is configured to adopt the first unified TCI state and the second unified TCI state, the first new reference signal corresponds to the first unified TCI state, and the second new reference signal corresponds to the second unified TCI state;
determining that the target channel and/or the target reference signal uses a beam corresponding to the first new reference signal for communication, wherein the target channel and/or the target reference signal is scheduled by first downlink control information (DCI), the first DCI indicates that the target channel and/or the target reference signal adopts the first unified TCI state, and the first new reference signal corresponds to the first unified TCI state;
determining that the target channel and/or the target reference signal uses a beam corresponding to the second new reference signal for communication, wherein the target channel and/or the target reference signal is scheduled by second DCI, the second DCI indicates that the target channel and/or the target reference signal adopts the second unified TCI state, and the second new reference signal corresponds to the second unified TCI state; or
determining that the target channel and/or the target reference signal uses a beam corresponding to the first new reference signal and/or a beam corresponding to the second new reference signal for communication, wherein the target channel and/or the target reference signal is scheduled by third DCI, the third DCI indicates that the target channel and/or the target reference signal adopts the first unified TCI state and the second unified TCI state, the first new reference signal corresponds to the first unified TCI state, and the second new reference signal corresponds to the second unified TCI state.

11. The method of claim 9, wherein determining, according to the signaling indication or the preset rule, that the target channel and/or the target reference signal uses the beam corresponding to the at least one new reference signal qnew for communication comprises:
receiving first radio resource control (RRC) configuration information indicating that a first channel and/or a first reference signal uses a beam corresponding to the first new reference signal for communication, wherein the target channel and/or the target reference signal is the first channel and/or the first reference signal;
receiving second RRC configuration information indicating that a second channel and/or a second reference signal uses a beam corresponding to the second new reference signal for communication, wherein the target channel and/or the target reference signal is the second channel and/or the second reference signal; or
receiving third RRC configuration information indicating that a third channel and/or a third reference signal uses a beam corresponding to the first new reference signal and/or a beam corresponding to the second new reference signal for communication, wherein the target channel and/or the target reference signal is the third channel and/or the third reference signal.

12. The method of claim 8, further comprising:
determining, based on the at least one new reference signal qnew, a path loss corresponding to a transmission of the target channel and/or the target reference signal;
wherein the target channel and/or the target reference signal comprises at least one of:
a PUCCH;
a DMRS corresponding to the PUCCH;
a PUSCH;
a DMRS corresponding to the PUSCH; or
an SRS.

13. The method of claim 9, wherein determining, according to the signaling indication or the preset rule, that the target channel and/or the target reference signal uses the beam corresponding to the at least one new reference signal qnew for communication comprises at least one of:
receiving fourth RRC configuration information used to determine that the target channel and/or the target reference signal uses a beam corresponding to the first new reference signal for communication, wherein the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state; or
receiving fifth RRC configuration information used to determine that the target channel and/or the target reference signal uses a beam corresponding to the second new reference signal for communication, wherein the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state.

14. The method of claim 2, further comprising:
sending a scheduling request for beam failure recovery; and/or
sending a PUSCH, wherein the PUSCH carries an uplink media access control control element (UL MAC CE), and the UL MAC CE indicates the at least one new reference signal qnew and at least one of:
an identifier of the first failure detection resource set;
an identifier of the first candidate beam reference signal set;
an identifier of the second failure detection resource set; or
an identifier of the second candidate beam reference signal set.

15. The method of claim 3, wherein the indication information comprises a MAC CE, and at least one unified TCI state indicated by the MAC CE corresponds to a code point in a TCI state indication field carried in a DCI.

16. The method of claim 3, wherein the indication information comprises a MAC CE and a DCI, the MAC CE indicates at least one unified TCI state corresponding to each of a plurality of code points corresponding to a TCI state indication field carried in the DCI, and the TCI state indication field carried in the DCI indicates one of the plurality of code points.

17. The method of claim 1, wherein at least one CORESET corresponding to the terminal is not configured with different CORESET pool indexes.

18. A communication method, performed by a network device, comprising:
sending first configuration information, wherein the first configuration information is used to instruct a terminal to configure a first candidate beam reference signal set and/or a second candidate beam reference signal set;
receiving information indicating a new reference signal qnew, wherein the new reference signal qnew is determined by the terminal from the first candidate beam reference signal set and/or the second candidate beam reference signal set; and
determining that a target channel and/or a target reference signal uses a beam corresponding to the at least one new reference signal qnew for communication.

19. The method of claim 18, wherein the first candidate beam reference signal set corresponds to a first failure detection resource set, and the second candidate beam reference signal set corresponds to a second failure detection resource set.

20. The method of claim 19, further comprising:
sending indication information, wherein the indication information is used to determine a first unified transmission configuration indication (TCI) state and a second unified TCI state.

21. The method of claim 20, wherein the first unified TCI state or the second unified TCI state comprises at least one of:
a joint TCI state;
a downlink (DL) TCI state; or
an uplink (UL) TCI state.

22. The method of claim 20 or 21, the first failure detection resource set and the second failure detection resource set are determined based on at least one of:
configuring the first failure detection resource set and the second failure detection resource set, and sending second configuration information, wherein the second configuration information indicates the first failure detection resource set and the second failure detection resource set;
determining the first failure detection resource set and the second failure detection resource set based on an association relationship between a control resource set (CORESET) and the first failure detection resource set and/or the second failure detection resource set, wherein the first failure detection resource set comprises a reference signal resource corresponding to a TCI state of the CORESET associated with the first failure detection resource set, and the second failure detection resource set comprises a reference signal resource corresponding to a TCI state of the CORESET associated with the second failure detection resource set;
determining the first failure detection resource set and the second failure detection resource set based on an association relationship between a CORESET and the first candidate beam reference signal set and/or the second candidate beam reference signal set, wherein the first failure detection resource set comprises a reference signal resource corresponding to a TCI state of the CORESET associated with the first candidate beam reference signal set, and the second failure detection resource set comprises a reference signal resource corresponding to a TCI state of the CORESET associated with the second candidate beam reference signal set; or
determining the first failure detection resource set and the second failure detection resource set based on the first unified TCI state and the second unified TCI state, wherein the first failure detection resource set comprises a reference signal resource corresponding to the first unified TCI state, and the second failure detection resource set comprises a reference signal resource corresponding to the second unified TCI state.

23. The method of claim 22, wherein the first failure detection resource set and the second failure detection resource set are determined based on the association relationship between the CORESET and the first failure detection resource set and/or the second failure detection resource set, the method further comprises:
sending third configuration information, wherein the third configuration information indicates the association relationship between the CORESET and the first failure detection resource set and/or the second failure detection resource set.

24. The method of claim 22, wherein the first failure detection resource set and the second failure detection resource set are determined based on the association relationship between the CORESET and the first candidate beam reference signal set and/or the second candidate beam reference signal set, the method further comprises:
sending fourth configuration information, wherein the fourth configuration information indicates the association relationship between the CORESET and the first candidate beam reference signal set and/or the second candidate beam reference signal set.

25. The method of claim 22, wherein the at least one new reference signal qnew comprises a first new reference signal and/or a second new reference signal;
the at least one new reference signal qnew is determined in at least one of following ways:
determining at least one first candidate reference signal as the first new reference signal in a case that a radio link quality corresponding to the first failure detection resource set is less than a first threshold Qout, and the first candidate beam reference signal set has the at least one first candidate reference signal whose radio link quality is greater than a second threshold Qin; or
determining at least one second candidate reference signal as the second new reference signal in a case that a radio link quality corresponding to the second failure detection resource set is less than a first threshold Qout, and the second candidate beam reference signal set has the at least one second candidate reference signal whose radio link quality is greater than a second threshold Qin.

26. The method of claim 25, wherein the target channel and/or the target reference signal comprises at least one of:
a physical downlink control channel (PDCCH);
a demodulation reference signal (DMRS) corresponding to the PDCCH;
a physical downlink shared channel (PDSCH);
a DMRS corresponding to the PDSCH;
a physical uplink shared channel (PUSCH);
a DMRS corresponding to the PUSCH;
a physical uplink control channel (PUCCH);
a DMRS corresponding to the PUCCH;
a sounding reference signal (SRS); or
a channel state information-reference signal (CSI-RS).

27. The method of claim 26, wherein determining that the target channel and/or the target reference signal uses the beam corresponding to the at least one new reference signal qnew for communication comprises at least one of:
determining that a first PDCCH uses a beam corresponding to the first new reference signal for communication, wherein the target channel is the first PDCCH, a CORESET to which the first PDCCH belongs is configured to adopt the first unified TCI state, and the first new reference signal corresponds to the first unified TCI state;
determining that a second PDCCH uses a beam corresponding to the second new reference signal for communication, wherein the target channel is the second PDCCH, a CORESET to which the second PDCCH belongs is configured to adopt the second unified TCI state, and the second new reference signal corresponds to the second unified TCI state;
determining that a third PDCCH uses a beam corresponding to the first new reference signal and/or a beam corresponding to the second new reference signal for communication, wherein the target channel is the third PDCCH, a CORESET to which the third PDCCH belongs is configured to adopt the first unified TCI state and the second unified TCI state, the first new reference signal corresponds to the first unified TCI state, and the second new reference signal corresponds to the second unified TCI state;
determining that the target channel and/or the target reference signal uses a beam corresponding to the first new reference signal for communication, wherein the target channel and/or the target reference signal is scheduled by first downlink control information (DCI), the first DCI indicates that the target channel and/or the target reference signal adopts the first unified TCI state, and the first new reference signal corresponds to the first unified TCI state;
determining that the target channel and/or the target reference signal uses a beam corresponding to the second new reference signal for communication, wherein the target channel and/or the target reference signal is scheduled by second downlink control information (DCI), the second DCI indicates that the target channel and/or the target reference signal adopts the second unified TCI state, and the second new reference signal corresponds to the second unified TCI state; or
determining that the target channel and/or the target reference signal uses a beam corresponding to the first new reference signal and/or a beam corresponding to the second new reference signal for communication, wherein the target channel and/or the target reference signal is scheduled by third downlink control information (DCI), the third DCI indicates that the target channel and/or the target reference signal adopts the first unified TCI state and the second unified TCI state, the first new reference signal corresponds to the first unified TCI state, and the second new reference signal corresponds to the second unified TCI state.

28. The method of claim 26, wherein determining that the target channel and/or the target reference signal uses the beam corresponding to the at least one new reference signal qnew for communication comprises:
sending first radio resource control (RRC) configuration information indicating that a first channel and/or a first reference signal uses a beam corresponding to the first new reference signal for communication, wherein the target channel and/or the target reference signal is the first channel and/or the first reference signal, and the first channel and/or the first reference signal uses the beam corresponding to the first new reference signal for communication;
sending second RRC configuration information indicating that a second channel and/or a second reference signal uses a beam corresponding to the second new reference signal for communication, wherein the target channel and/or the target reference signal is the second channel and/or the second reference signal, and the second channel and/or the second reference signal uses the beam corresponding to the second new reference signal for communication; or
sending third RRC configuration information indicating that a third channel and/or a third reference signal uses a beam corresponding to the first new reference signal and/or a beam corresponding to the second new reference signal for communication, wherein the target channel and/or the target reference signal is the third channel and/or the third reference signal, and the third channel and/or the third reference signal uses the beam corresponding to the first new reference signal and/or the beam corresponding to the second new reference signal for communication.

29. The method of claim 25, further comprising:
determining, based on the at least one new reference signal qnew, a path loss corresponding to a transmission of the target channel and/or the target reference signal;
wherein the target channel and/or the target reference signal comprises at least one of:
a PUCCH;
a DMRS corresponding to the PUCCH;
a PUSCH;
a DMRS corresponding to the PUSCH; or
an SRS.

30. The method of claim 26, wherein determining that the target channel and/or the target reference signal uses the beam corresponding to the at least one new reference signal qnew for communication comprises at least one of:
determining that the target channel and/or the target reference signal uses a beam corresponding to the first new reference signal for communication, and sending fourth RRC configuration information used to determine that the target channel and/or the target reference signal uses the beam corresponding to the first new reference signal for communication, wherein the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state; or
determining that the target channel and/or the target reference signal uses a beam corresponding to the second new reference signal for communication, and sending fifth RRC configuration information used to determine that the target channel and/or the target reference signal uses the beam corresponding to the second new reference signal for communication, wherein the target channel and/or the target reference signal is at least one of the PDCCH, the DMRS corresponding to the PDCCH, the CSI-RS, or the SRS, and the target channel and/or the target reference signal is not configured to adopt the first unified TCI state or the second unified TCI state.

31. The method of claim 19, further comprising:
receiving a scheduling request for beam failure recovery; and/or
receiving a PUSCH, wherein the PUSCH carries an uplink media access control control element (UL MAC CE), and the UL MAC CE indicates the at least one new reference signal qnew and at least one of:
an identifier of the first failure detection resource set;
an identifier of the first candidate beam reference signal set;
an identifier of the second failure detection resource set; or
an identifier of the second candidate beam reference signal set.

32. The method of claim 20, wherein the indication information comprises a MAC CE, and at least one unified TCI state indicated by the MAC CE corresponds to a code point in a TCI state indication field carried in a DCI.

33. The method of claim 20, wherein the indication information comprises a MAC CE and a DCI, the MAC CE indicates at least one unified TCI state corresponding to each of a plurality of code points corresponding to a TCI state indication field carried in the DCI, and the TCI state indication field carried in the DCI indicates one of the plurality of code points.

34. The method of claim 18, wherein at least one CORESET corresponding to the terminal is not configured with different CORESET pool indexes.

35. A communication apparatus, comprising:
a processing module, configured to determine at least one new reference signal qnew from a first candidate beam reference signal set and/or a second candidate beam reference signal set; and
a communication module, configured to determine, according to a signaling indication or a preset rule, that a target channel and/or a target reference signal uses a beam corresponding to the at least one new reference signal qnew for communication.

36. A communication apparatus, comprising:
a communication module, configured to:
send first configuration information, wherein the first configuration information is used to instruct a terminal to configure a first candidate beam reference signal set and/or a second candidate beam reference signal set;
receive information indicating a new reference signal qnew, wherein the new reference signal qnew is determined by the terminal from the first candidate beam reference signal set and/or the second candidate beam reference signal set; and
determine that a target channel and/or a target reference signal uses a beam corresponding to the at least one new reference signal qnew for communication.

37. A communication device, comprising:
a processor,
a memory for storing instructions executable by the processor;
wherein the processor is configured to perform the method of any one of claims 1 to 17.

38. A communication device, comprising:
a processor,
a memory for storing instructions executable by the processor;
wherein the processor is configured to perform the method of any one of claims 18 to 34.

39. A non-transitory computer-readable storage medium, wherein when instructions in the storage medium are executed by a processor of a terminal, the terminal is caused to perform the method of any one of claims 1 to 17.

40. A non-transitory computer-readable storage medium, wherein when instructions in the storage medium are executed by a processor of a terminal, the terminal is caused to perform the method of any one of claims 18 to 34.
